# EUROPEAN PATENT APPLICATION

(11) **EP 0 989 722 A1**
(43) Date of publication of application: **29.03.2000**
(21) Application number: 99307445.9
(22) Date of filing: 21.09.1999
(51) Int. Cl.: H04M 3/56, H04N 5/445

(54) **Multiview multimedia generation system**

(30) Priority: 23.09.1998 AU PP612998
(71) Applicant: CANON KABUSHIKI KAISHA, Tokyo (JP)
(72) Inventor: Islam, Farhad Fuad, Marsfield, NSW 2122 (AU)
(74) Representative: Beresford, Keith Denis Lewis

(57) **Abstract**

An information distribution system (600) is disclosed having a primary context presentation arrangement (MCP 2) comprising (first) multimedia presentation means (602) configured for presentation of primary information content (614, 618) to a proximal audience of plural persons (616, 622) and (first) processor means (64) for providing the primary information content (614, 618) to the first multimedia presentation means (602) and for associating secondary information content (610, 612, 620) with the primary information content. The secondary information content is constrained to a context of the primary information content. At least one portable presentation arrangement (PMV 3) is also provided and comprising (second) multimedia presentation means (604) and (second) processor means (64). The portable presentation arrangement is operable by a user (616, 622) being one of the persons for selectable presentation of information selected from the group consisting of the primary information content and the secondary information content. A local communication network (9) interconnects the primary context presentation arrangement with each portable presentation arrangement and provides the primary information content to each portable presentation arrangement and via which at least one information selection by a user operating a corresponding personal presentation arrangement is conveyed to the first processor means for distribution (PULL) of corresponding selected secondary information content to the corresponding personal presentation arrangement. Other manipulations can also be performed to PUSH information from a portable presentation arrangement (3) to the multimedia presentation means (2), or for exchanging (TRANSFER) information between plural portable presentation arrangement, the ANNOTATION of such information, and its storage (STORE).

## Description

### Field of the Invention

The present invention relates to the generation of multimedia contents in output devices and, in particular, to a system which permits a plurality of users to access information derived from a context related source but to individually traverse information related to that context.

### Background Art

The traditional technique of obtaining additional information corresponding to a multimedia context is through the exploration of embedded hyperlinks. However, traditional systems for hyperlinked content presentation suffer from many limitations. For example, after traversing several layers of hyperlinks, users tend to lose track of the main context which was the initial focus of attention and which instigated the traversal of the hyperlinks in the first place. Further, in multiuser scenarios, all users are constrained to be presented with the same hyperlinked information at any one time. There is therefore a need to hold the multimedia context in perspective while this context relevant additional/hyperlinked information is explored independently by individual users, who are simultaneous consumers of the multimedia context.

### Summary of the Invention

It is a concern of the present invention to substantially overcome, or at least ameliorate, at least some problems associated with the prior art.

A proposed solution to these problems results in the process of independent consumer access to embedded hyperlinked content under the simultaneous generation of a main multimedia context.

In accordance with one aspect of the present invention there is disclosed a method of providing information to a plurality of users, the method including the steps of:
(a) reproducing audio and/or visual data having predetermined contents on a first reproduction means;
(b) receiving input from at least one of said plurality of users and providing user data in response to said input, said user data being associated with at least part of said predetermined contents; and
(c) reproducing on at least one second reproduction means said user data to at least said user.

In accordance with one aspect of the present invention there is disclosed a system for providing information to a plurality of users, said system including:
an information source having a first reproduction means for reproducing (first) media data having predetermined contents simultaneously to a plurality of users,
at least one information destination operable by one of said users and having a second reproduction means and a user input, said information destination being operable via said user input to select at least part of said predetermined contents to reproduce by said second reproduction means (second) media data associated with said selected part.

Typically, a generic multimedia 'context' is reproduced by the first reproduction means, and further media accessible therefrom lies within or associated with the generic context. Thus users of the second reproduction devices are constrained to initiate exploration from the generic context and may thereafter explore and/or develop information in relation with the context.

The second reproduction means thus provides at least one personal view for each consumer of the 'context' or main media. Information hyperlinked or associated with the context may be independently consumed or explored by each individual user through their personal displays.

Preferably the first reproduction means is a relative large audio/visual display arranged typically for viewing by a plurality of users. The second reproduction means is a relatively small (personal) audio/visual display, arranged typically for viewing by a single user. Advantageously the small display is hand portable and linked by a radio frequency network to the large display.

Embodiments support the interaction between the context on large/public display and the multiview contents on the personal displays through a number of media interaction functionalities. A primary interaction functionality is to PULL media from large/public display to private display(s) for independent exploration of the associated hyperlinks.

Other interaction functionalities include:
(i) "push" media from personal display(s) to the large/public display for public presentation;
(ii) "transfer" media from one personal display to another personal display(s), for side chat;
(iii) "annotate" media as required; and
(iv) "store" media.

In accordance with another aspect of the present invention there is disclosed an information distribution system, said system comprising:
(a) a primary context presentation arrangement comprising (first) multimedia presentation means configured for presentation of primary information content to a proximal audience comprising plural persons, and (first) processor means for providing the primary information content to the first multimedia presentation means and for associating secondary information content with the primary information content, the secondary information content being constrained to a context of the primary information content;
(b) at least one portable presentation arrangement comprising (second) multimedia presentation means and (second) processor means and operable by a user being one of the persons for selectable presentation of information selected from the group consisting of the primary information content and the secondary information content; and
(c) a local communication network interconnecting the primary context presentation arrangement with each portable presentation arrangement for providing the primary information content to each portable presentation arrangement and via which at least one information selection by the user operating the corresponding the personal presentation arrangement is conveyed to said first processor means for distribution of corresponding selected secondary information content to said corresponding personal presentation arrangement.

Other aspects of the invention are also disclosed.

### Brief Description of the Drawings

A number of embodiments of the present invention will now be described with reference to the drawings in which:
Fig. 1 illustrates a multiview multimedia system of the preferred embodiment;
Fig. 2 is a schematic functional module diagram of components of the system of Fig. 1;
Fig. 3 is a schematic block diagram representation of an arrangement configured to implement the functions of Fig. 2;
Fig. 4 is a schematic functional diagram of the action manager of Fig. 2;
Fig. 5 is a flow diagram depicting the operation of the arrangement of Fig. 4;
Fig. 6 is a schematic functional diagram of the media object handler of Fig. 2;
Fig. 7 is a flow diagram representing operation of the functional diagram of Fig. 6;
Fig. 8 is a schematic functional diagram of the media converter of Fig. 2;
Fig. 9 is a schematic functional diagram of the media output device of Fig. 2;
Fig. 10 is a flow diagram representative of operation of the arrangement of Fig. 9;
Fig. 11 is a schematic functional diagram of an input device of the arrangement of Fig. 2;
Fig. 12 is a flow diagram representing operation of the arrangement of Fig. 11;
Fig. 13 is a schematic functional representation of the information exchanger of Fig. 2;
Fig. 14 is a schematic functional representation of the arrangement of Fig. 13;
Fig. 15A is a schematic functional diagram of an alternative embodiment of the present invention;
Fig. 15B depicts an alternative networked configuration;
Fig. 16 schematically illustrates a computer system in which the embodiment of Fig. 15 may be implemented;
Fig. 17A is a illustration of one example of the preferred embodiment in use;
Fig. 17B depicts changes in commodities used as a result of the arrangement of Fig. 17A;
Fig. 18 depicts a further example of use of an embodiment;
Fig. 19 depicts a digital television broadcast embodiment;
Fig. 20 depicts a further example of use;
Fig. 21 depicts a further example of use;
Fig. 22 schematically represents the processing of a PULL command;
Fig. 23 depicts a multigroup scenario;
Fig. 24 depicts an office presentation application; and
Fig. 25 schematically illustrates the carriage of main and associated media objects of one embodiment.

### Detailed Description

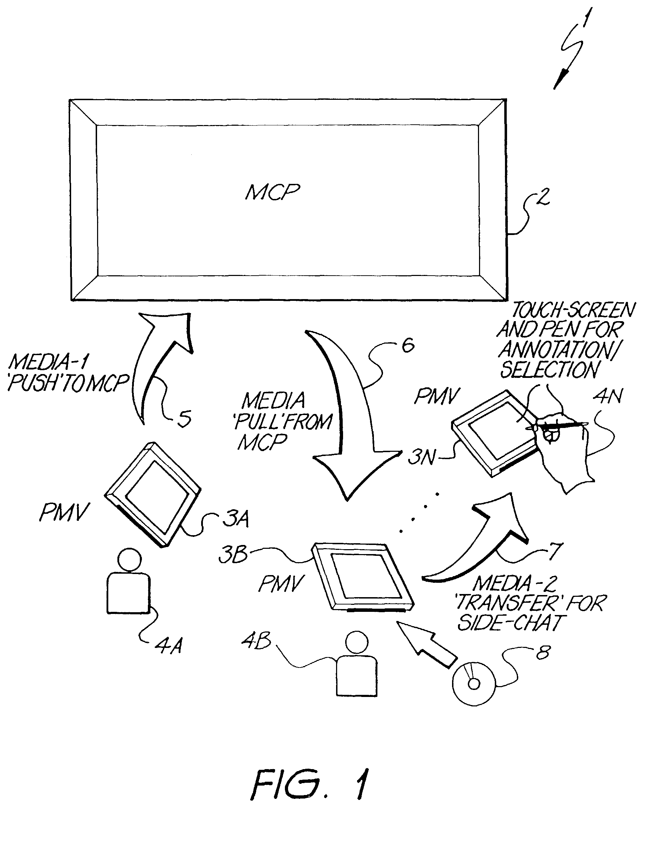

Fig. 1 illustrates a multiview multimedia presentation system 1 which includes a media context presenter (MCP) 2 configured for the presentation of a main multimedia context to a plurality of users typically physically located within the visible range of the MCP 2 and able to observe/view the MCP 2. The main multimedia context is provided by predetermined or pre-authored multimedia compilation which may include text, images, associated sound and/or links to other related or appropriate compilations. Although individual components may differ in subject matter, all compilation components advantageously relate to the context underlying the authoring of the works.

Fig. 1 also illustrates a number of hand portable personal media viewers (PMV's) 3A, 3B...3N for those persons observing the MCP 2 who wish to take part in, and interact with the main multimedia context being produced by the MCP 2. Such persons are termed herein "users" and utilise the personal media viewers 3 to obtain a personal and independent view of contents associated with, or hyperlinked to, the main multimedia context displayed by the MCP 2.

The MCP 2 and PMV(s) 3 interact with each other in a manner that takes account of user requests and any privileges associated therewith, characteristics of media objects, and resources for resolving media quality of service and the like. With such an arrangement, the individual users 4 are able to observe the main multimedia context and, with their associated PMV 3, extract media in relation to one or more portions of the main context not necessarily being produced by the MCP 2 at any one time.

The system 1 has wide applications in commerce, classroom education, conference presentation, broadcast presentation and the like. Prior to examples of such use being described, it is appropriate to examine the functionality of the system from which the wide scope of applications will become apparent.

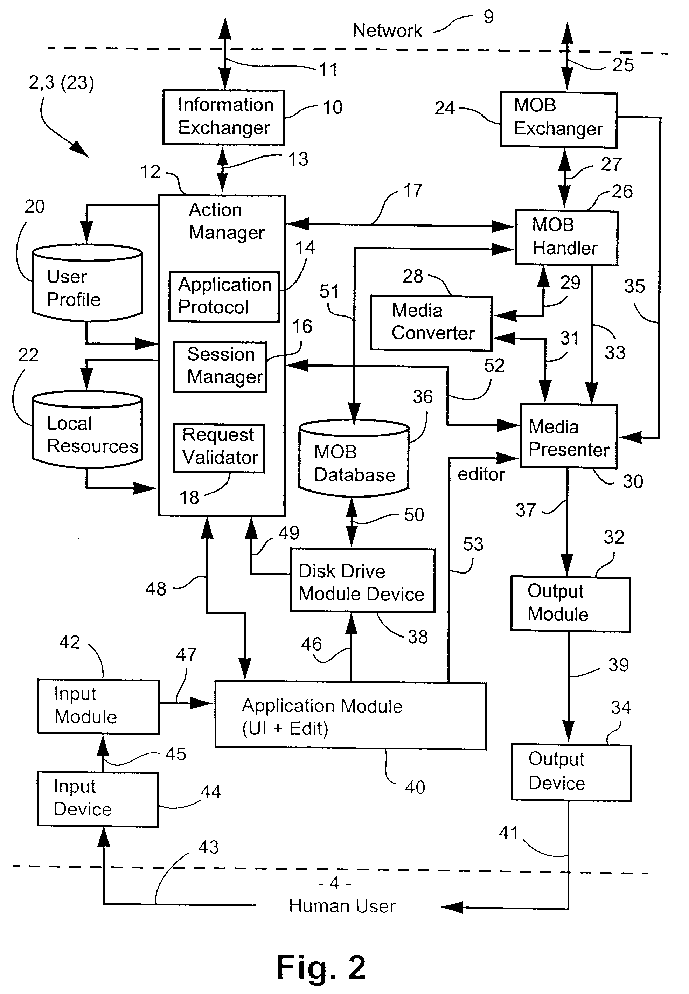

Turning now to Fig. 2, it is noted that because of the similar functionality, each of the MCP 2 and PMV's 3 have essentially overlapping functions and hence the same functional block diagram is appropriate for both modules, as is illustrated in Fig. 2. Significantly, the MCP 2 and PMV's 3 interconnect via a communication network 9 that may include any one or combination of a hardwired local area network, a radio frequency local area network, or an optical network. Typically, the network 9 interconnecting the MCP 2 and PMV's 3 will be radio frequency based, thereby permitting maximum portability of the PMV's 3.

Throughout this functional description, and specifically with reference to Fig. 2, the MCP 2 or PMV's 3 shall be each described, for the sake of simplicity, as a "media unit 23".

As seen in Fig. 2, the media unit 23 includes two interconnections to the network 9, one connection 11 interconnecting with an information exchanger 10 being for the communication of data which is not of a time critical nature, such as protocol data units that are exchanged during negotiations (to be described). The other connection 25 is for the communication of media objects (MOB's) which is a term used herein to describe any consumable multimedia information including text, images including static images and video images, graphics and animations, audio data and the like. This data is handled separately through a media object exchanger 24 as this data is typically of a time critical nature and is exchanged through the MOB exchanger 24 in an uninterrupted manner. The two interconnections 11 and 25 with the network 9, may be logical or physical. Such physical connections involve physically distinct communication links, whereas a number of logical connections may be realised within a single physical link through the use of appropriate networking protocols.

As seen in Fig. 2, the information exchanger 10 connects via a data connection 13 to an action manager 12 incorporating an application protocol 14, a session manager 16 and a request validator 18. The action manager 12 manages a multimedia session and also acts to resolve media quality of service (QOS) issues. The action manager 12 handles interactions between communication entities (eg. the MCP 2 and one of the PMV's 3) and may engage in negotiation between the communication entities to achieve their respective desired goals for respective media presentation requirements. The action manager 12 utilises information from a local resource database 22 which dynamically identifies those specific resources available within the media unit 23 and a user profile database 20 which controls user access to certain media objects and the like.

The application protocol module 14 is used to support application specific functionalities. The request validator 18 validates user requests in terms of available media handling resources, whilst the session manager 16 maintains progressive control of a multimedia session and interacts with both the application protocol module 14 and request validator 18 and, where appropriate, negotiates with an action manager of the MCP 2 or PMV 3 (as required) to then instigate appropriate action for the session.

The MOB exchanger 24, having received media objects from the network 9, communicates those objects to a media object handler 27 which extracts and sends a media object or its component (eg. header, sub-object, etc) to a required destination.

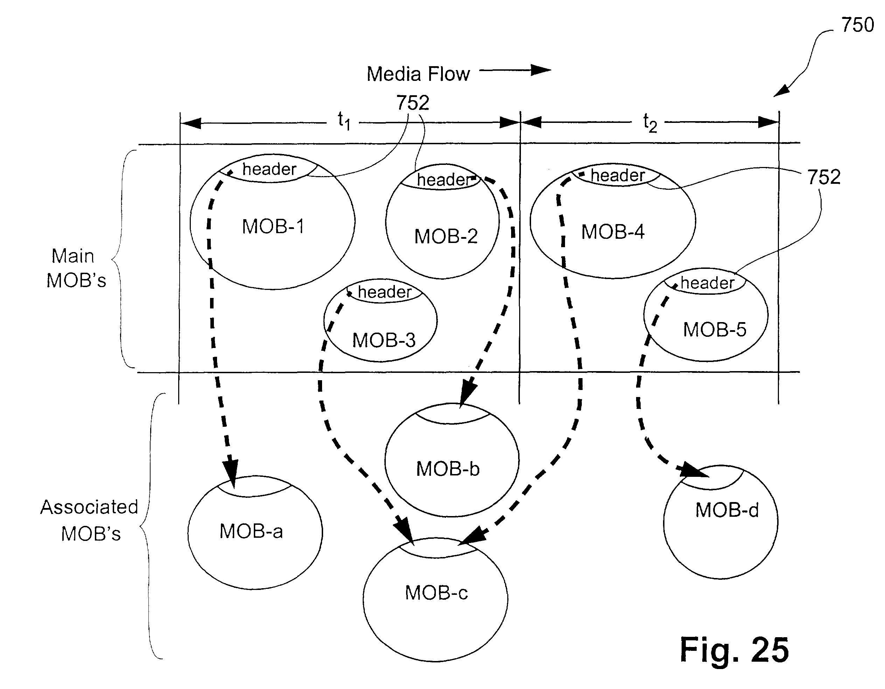

Although specific implementations may vary, Fig. 25 depicts one embodiment where the media objects are formed as packages of data supplied on a temporal basis and having a number of data levels. The data levels for example may represent different spatial extents within the image to be displayed on the MCP 2, PMV 3 (eg. icons). In Fig. 25, there is depicted a media flow 750 broken into a number of time intervals (t₁,t₂, ...). During these intervals a number of main media objects (MOB-1, ..., MOB-5) are received for processing, and represent the main media flow that is recommended by an author of the overall media content. This main media constitutes the "context" of the presentation and is reproduced by the MCP 2.

Fig. 25 also shows associated media objects (MOB-a, ..., MOB-d) which, at another data level, represent associated hyperlinked additional information corresponding to the main MOB's and which may be specified by the author who crates the overall multiview multimedia presentation. The data carried by the associated MOB's for example may be that selectable by the users 4A, 4B for reproduction on the corresponding PMV's 3A and 3B. As seen from Fig. 25, the associated MOB's are linked via header information 752 contained in at least one of the main MOB's.

The MOB's described above, as will be appreciated by skilled persons, are similar with audiovisual objects that are described by the MPEG-4 international standard. The MOB headers 802 are preferably configured to include information that describes the characteristics of the corresponding MOB. Examples of such information may include:
- the MOB type
- a set of spatio-temporal extents
- where appropriate, extents may include links or association with a sub-presentation
- other information such as iconic representations that both convey information and provide a graphical user interface.

The MOB header information 802 may be represented by an international standard such as MPEG-7. The spatio-temporal synchronisation that forms such a media presentation may be specified by an MPEG-4 scene formation mechanism or alternatively through international standards such a W3C SMIL (Synchronised Multimedia Integration Language) or similar. SMIL is an application of W3C XML (Extensible Markup Language). The appropriate configuration of the MOB's and related data provides for an interaction mechanism between the users and pre-authored MOB's during a multimedia presentation.

The MOB handler 26 receives a request from the action manager 12 via a connection 17 which includes information such as MOB identification (ID), address of the source of the MOB and of the sink (destination) and operates as requested.

The MOB handler 26 is configured to convey media objects directly to a media presenter 30 via a connection 33 and also to and from a media converter 28 via a connection 29. A further connection 51 is provided to permit storage of the media objects in a database 36 for their subsequent retrieval therefrom. Database 36 can include a working database or an archive database and may be implemented using a connection 50 to a disk drive module device 38. In the case where the media unit 23 forms the MCP 2, main and associated MOB's are preferably stored in the local MOB (MCP) database as required. In applications to the PMV 3, the main MOB's may transfer directly from the MOB exchanger 24 to the media presenter 30 via a connection 35, whereby relevant meta-MOB's may be stored in the local (PMV) MOB database 36.

The media converter 28 is provided to convert media as required between different data formats and also from one quality of service (QOS) to another. Such is performed using a media transformer including media encoders, decoders, scalers etc. The conversion process may for example include appropriate resolution conversion of video images for subsequent reproduction on a display with some desired quality of service. The media converter 28 also communicates with the media presenter 30 via a connection 31 to allow direct output of media components.

The media presenter 30 is configured to provide synchronisation of media streams for appropriate handling and reproduction by an output module 32 and output device(s) 34 which, together with the media presenter 30, form an output network. As seen, the media presenter 30 couples to the output module 32 via a connection 37, the output module 32 operating to convert media data into an appropriate format suitable for reproduction, and which conveys that format via connection 39 to the output device(s) 34 which performs the appropriate reproduction. The reproduced media is depicted as information 41 being presented to the user 4.

The user 4 is also able to provide input to the media unit 23 which is represented by an input 43 being supplied to an input device 44, such as a keyboard or other apparatus. The input device 44 provides an input signal 45 which is interpreted via an input module 42 to derive a number of user commands 47 which are supplied to an application module 40. The application module 40 typically includes a software user interface (UI) for media manipulation, and controls the implementation of generic media manipulation commands such as "push", "pull", "transfer", "annotate", and "store". In addition to application software, the application module 40 may also operate run-time specific software, for example for the presentation of an array of media in a routine and reproducible manner. The application module 40 communicates via a connection 46 to the disk drive device 38 and with the action manager 12 via a line 48 for the implementation of specific user interface requests. Further, the application module 40 includes an output 53 which mainly provides for media editing functions (eg. annotation, etc) to be displayed via the media presenter 30.

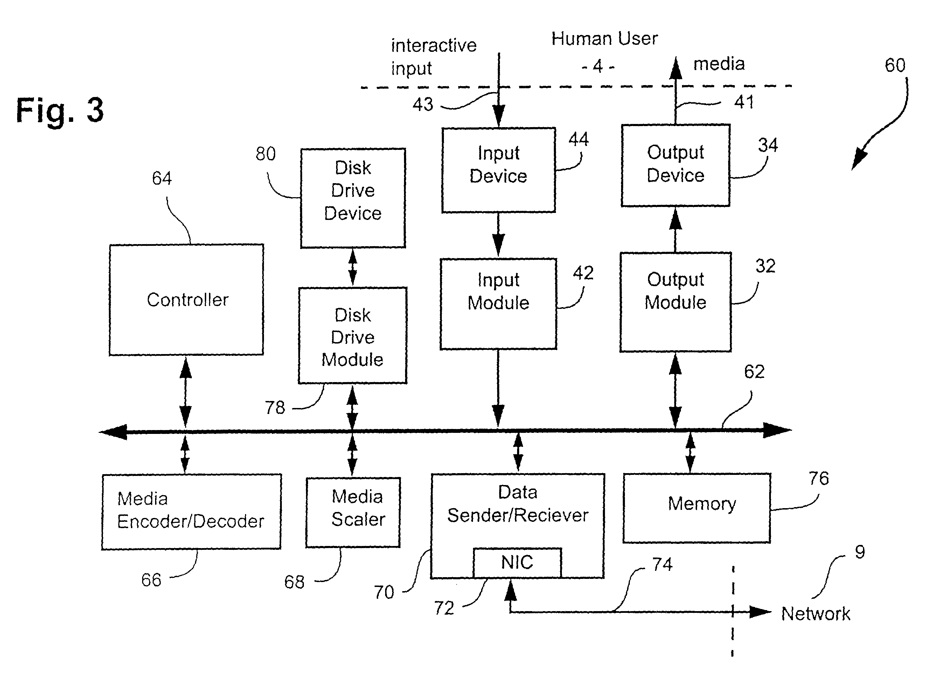

The media unit 23 of Fig. 2 is a functional representation which can be implemented in hardware by an arrangement 60 seen in Fig. 3. The arrangement 60 illustrates the user 4 providing an interactive input 43 to the input device 44, the input device 44 being coupled via the input module 42 to an internal bus 62 that interconnects each of the major components of the arrangement 60. For example, the output module 32 couples to the bus 62 and provides for conversion of processed media and supply to the output device 34 which then reproduces the media 41 for consumption by the user 4. The arrangement 60 includes a controller 64, generally implemented by a microprocessor and/or associated microcomputing systems which incorporate essential software and firmware for functional modules for the arrangement 60 and their appropriate interaction. Coupled to the bus 62 is a memory unit 76 typically formed from semiconductor memory which provides for the storage for manipulation of media and commands where appropriate during a multimedia session. Storage is also supplemented by a disk drive module 78 coupled to the bus 62 which connects to a disk drive storage device 80 which operates in a known fashion for the non-volatile storage of large quantities of data and the like. The arrangement 60 also includes a data sender/receiver 70 which incorporates a network interface connection (NIC) 72 that provides coupling via a link 74 to the network 9. In the preferred embodiment, the NIC is typically implemented by a radio frequency transceiver and the link 74 by free space. The arrangement 60 also includes two other major hardware components, those being a media encoder/decoder 66 and a media scaler 68. The media encoder/decoder 66 provides for the conversion of multimedia components as described above and which will be further described below, whereas the media scaler 68 provides for an appropriate scaling of the individual media components, typically images and the like.

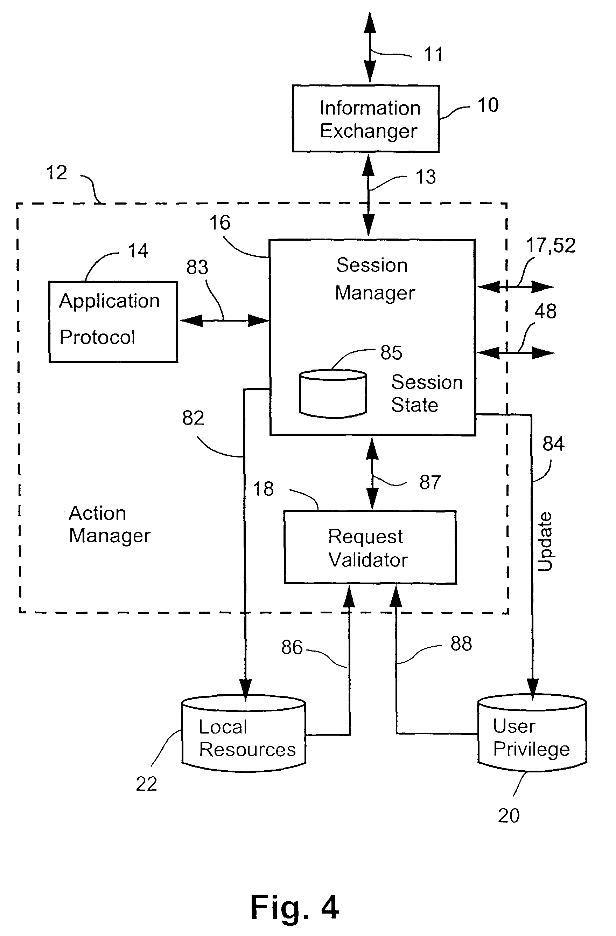

Fig. 4 shows the arrangement of the action manager 12 which shows that non-time critical data is received from the information exchanger 10 via the line 13 into the session manager 16. The session manager 16 incorporates a session state database 85 representing primary components of different sessions that may be used to source and/or deliver different types of media. The session manager 16 interacts with the application protocol 83 which provides to the session manager 16 the next action based on current state of the session and on the request from the user. The user profile database 20 contains user privileges and roles regarding media consumption. The database 20 may be updated by the session manager dynamically. Depending on the requirements of media manipulation in a session, the session manager 16 reserves local resources from the database 22 for specific operations. In this fashion, when user requests are transferred to the action manager 12 from the application module 40 via the connection 48, those requests are transferred via a connection 87 to the request validator 18 which then checks both the user profile database 20 via a connection 88, and the local resource database 22 via connection 86, to determine if the user request is one that may be validly performed for the particular type of media being handled at the time, or alternatively whether or not the user may perform or is authorised to perform that particular operation. Also shown in Fig. 4 are connections 17 and 52 to the session manager 16 for controller notification of exchange with other local modules.

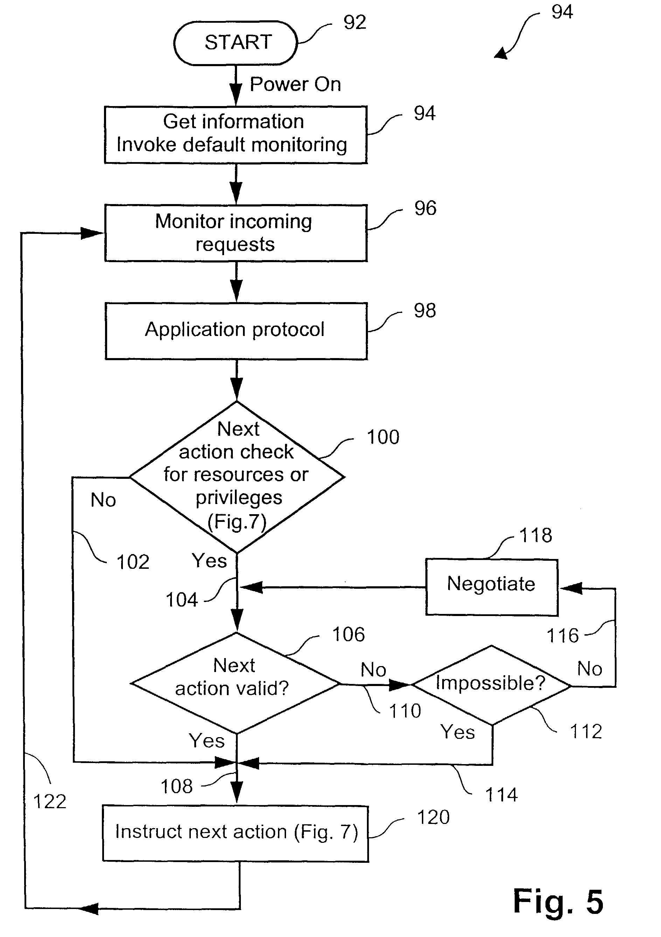

The operation of the session manager 16 is best described with reference to the flow chart 90 of Fig. 5 which starts at step 92 enabled from powering on of the media unit 23. After this, control passes to step 94 where the request validator 18 derives information regarding local media handling resources from the database 22 and any user profile or privilege information from the database 20. The session manager 16 invokes a default user interface and monitors for incoming requests and notifications.

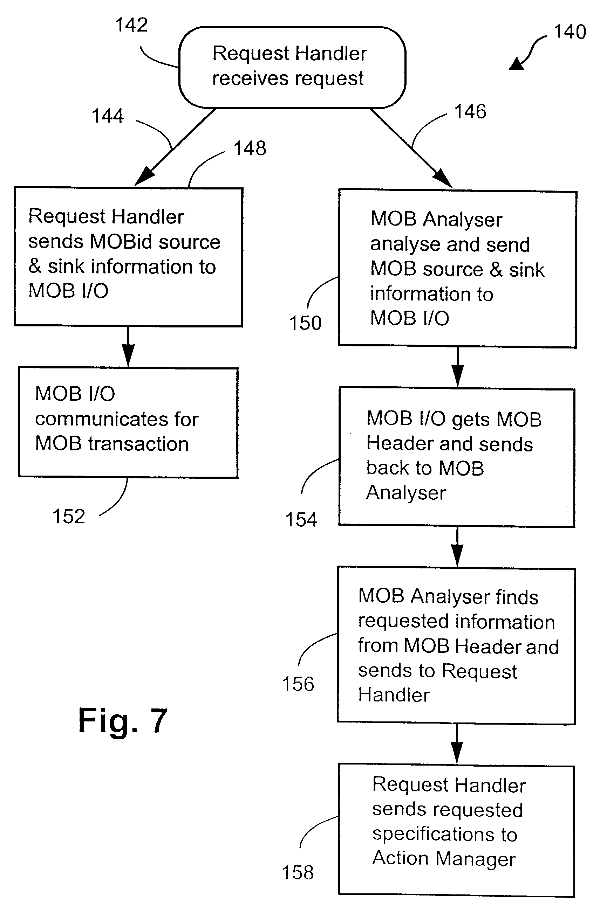

At step 96, monitoring of incoming requests and notifications by the session manager 16 is maintained active in a loop and when a request notification arrives to the session manager 16, for example from the application module 40 or the information exchanger 10, control passes to step 98 where the session manager 16 asks the application protocol 14 for advice on the next action as a consequence of the request. Whilst that advice is being sought, the session manager 16 sends to the application protocol 14 information regarding the current session state and the received request and/or notification. The session manager 16 then awaits a response from the application protocol 14. When that response is received by the session manager 16, step 100 then determines whether or not the next course of action involves media handling resources or user privileges. the procedure performed by step 100 is that represented by steps 150, 154, 156 and 158 of Fig. 7 (to be described). If such is the case and step 100 returns a "yes", control is passed via a line 104 to step 106 where the session manager 16 checks if the course of action is valid in terms of media handling resources and user privileges. The session manager 16 verifies this from the request validator 18 as seen in Fig. 2. If the course of action is valid (yes), control passes via line 108 to step 120 where the session manager 16 instructs the appropriate module of the media unit 23 to perform the appropriate function. Step 120 in this regard performs the procedure represented by steps 148 and 152 of Fig. 7. After step 120, control is returned via a loop 122 to step 96.

If the result of the decision of step 106 is invalid (no), path 110 invokes a further test 112 as to whether or not the requested action is not just invalid, but is also impossible. If the requested action is impossible (yes), control passes via path 114 to step 120 where the instructed next action is a request for further instructions from the user. If the result of the test of step 112 is that the action is not impossible (no), control passes via path 116 to step 118 which invokes a negotiation with the requesting entity for a resource resolution. In this fashion, a number of media units 23, using their action managers 12 may interact with each other to resolve those resources required for a particular media presentation and the availability of those resources. After the negotiation of step 118, control returns to step 106.

If the result of step 110 does not require any resources (no), control passes via path 102 to step 120 and the session manager 16 is made available for any further incoming requests.

Table 1 below indicates examples of session states resident within the session state database 85.

**Table 1**

| **Self Activity** | **Presence of Entities** |
|---|---|
| • Just Powered ON & Monitoring | • One MCP |
| • Generating Media Locally | • One MCP + MCP-Controller |
| • Waiting for Remote Response | • One MCP + MCP-Controller PMV(s) |
| • | |
| • | |
| • | |

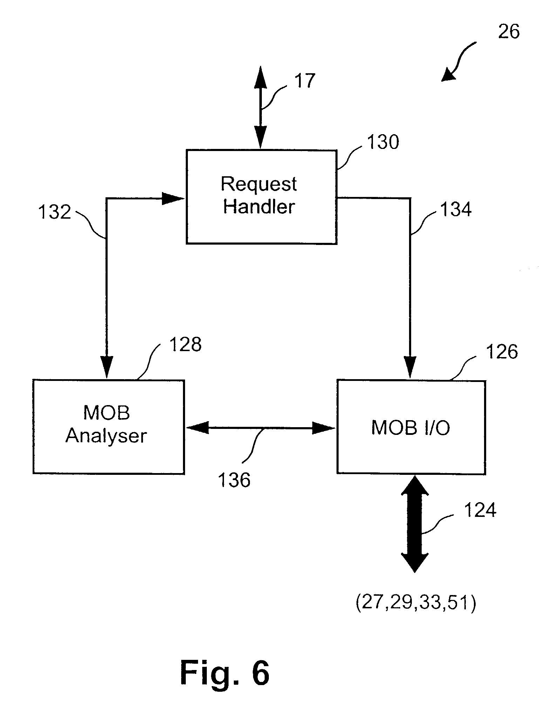

Fig. 6 shows the media object handler 26 which includes a request handler 130 interfaced to the action manager 12 via the line 17 to receive requests therefrom and to forward MOB information thereto. The request handler 130 passes media object identifications, destinations, port numbers and addresses via a connection 134 to an MOB I/O interface 126 which couples via a number of buses 27,29,33,51 shown in Fig. 2 but in Fig. 6 indicated as a single bus 124 to each of the MOB exchanger 24, MOB database 36, media converter 28 and media presenter 30. The interface 126 acts to switch media objects between any of those four functional modules. The interface 126 outputs a media object header signal on a connection 136 to an MOB analyser 128 which forwards MOB specifications via a line 132 to the request handler 130 and receives MOB requests via the same line.

The operation of the MOB handler 26 will be apparent from the flow chart 140 of Fig. 7 which commences at step 142 where the MOB handler 26 receives a request from the action manager 12 to send a media object to a particular destination or to obtain information regarding a particular media object. If the request is to send a media object, control passes via line 144 to step 148 where the request handler 130 sends a media object identification, source and sink information to the MOB I/O interface module 126. Thereafter, at step 152 the interface module 126 communicates with one of the MOB database 36, MOB exchanger 24 or the media converter 28 for the appropriate MOB transaction. If step 142 requests MOB information, control passes along line 146 to step 150 where the analyser 128 receives MOB information request and sends an MOB identification source and sink information to the I/O interface module 126 via the connection 136.

At step 154, the interface module 126 obtains the requested MOB header and forwards it to the analyser 128 via the connection 136. This is followed by step 156 where the analyser 128 receives the requested header information and formulates a MOB specification which is then sent to the request handler 130. This is then followed by step 158 where the request handler 130 sends the requested MOB specifications to the action manager 12 via the connection 17.

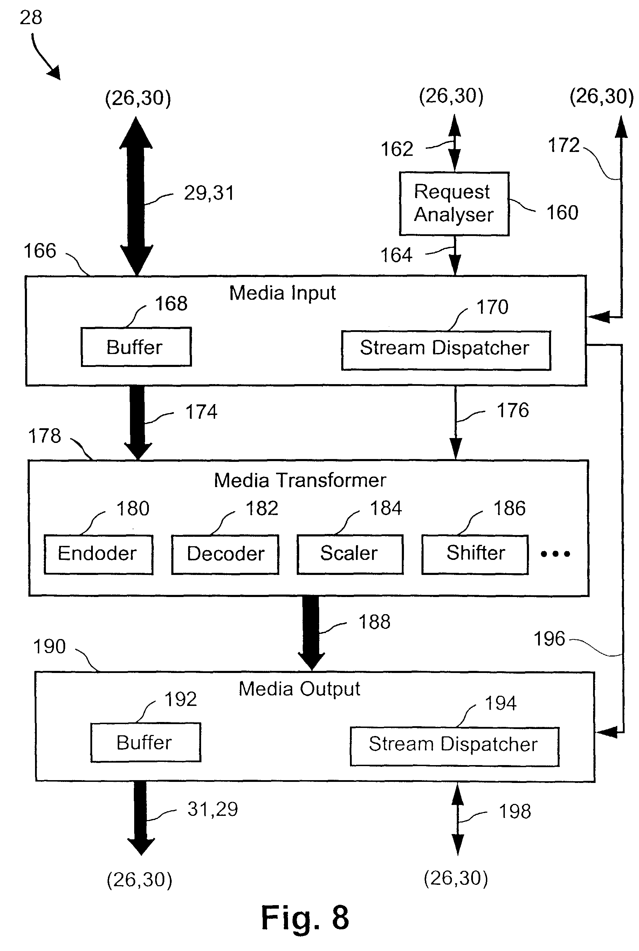

Fig. 8 shows the arrangement of the media converter 28 which has a media input unit 166 which connects via the media buses 29,31 to each of the MOB handler 26 and media presenter 30 respectively. The media input unit 166 further receives an input 164 from a request analyser 160 coupled to each of the MOB handler 26 and media presenter 30 via a connection 162 and from which requests are received and communicated. A further connection 172 provides for handshaking with the source of media data. The media input module 166 includes a buffer unit 168 and a stream dispatcher 170, the buffer 168 providing for coupling of MOB data via a bus 174 to a media transformer 178. The stream dispatcher 170 acts to couple, via a connection 176, media conversion specifications to the media transformer 178. The media transformer 178 includes a range of processes 180-186 configured to perform transformations on the media data in order to convert the media data to a form suitable for output from the converter 28 either for communication over the network 9 or for reproduction via the output device 34. As illustrated, the transformer 178 includes an encoder 180, a decoder 182, a scaler 184 and a shifter 186. Other arrangements relating to appropriate media would be understood by those skilled in the art. For example, the decoder may be an MPEG decoder for video reproduction including moving images and audio. Other process such as still image (eg. JPEG) decoding and digital audio decoding may be performed. Corresponding encoding may also be appropriate in certain applications. The transformer 178 outputs converted media on a bus 188 to a media output unit 190 also input with a specification of the media sink (destination) 196 obtained from the media input unit 166. The media output unit includes a buffer 192 and a stream dispatcher 194 complementing those of the input unit 166 and which also outputs corresponding converted media on the buses 31,29 and handshaking information with the media sink via the line 198.

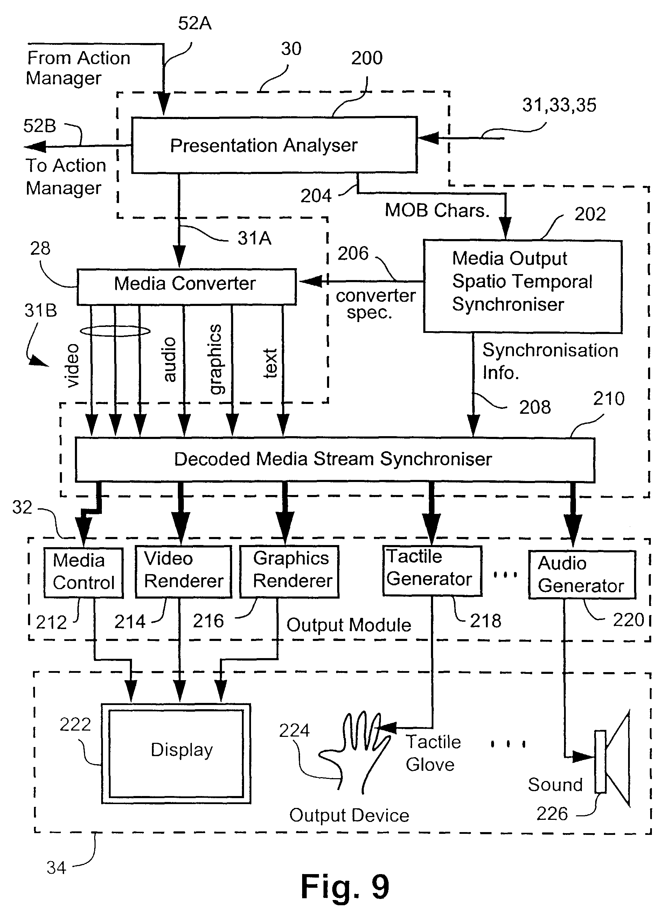

Fig. 9 is a schematic functional representation of the output network formed by the media presenter 30, output module 32 and output device 34. As seen, the media presenter 30 includes a presentation analyser 200 which receives scene information MOB data from the MOB exchanger 24 via the line 35, the MOB handler 26 via the line 33 and from the media converter 28 via the line 31. The presentation analyser 200 also receives input commands from the action manager 12 via a line 52A and transfers the displayed MOB header via a line 52B also to the action manager 12. The input analyser 200 communicates MOB data via a line 31A to the media converter 28 and also MOB characteristics including synchronisation and quality of service information via a line 204 to a media output spatio temporal synchroniser 202. The synchroniser 202 operates to ensure that different forms of media (eg. video, audio and graphics) are appropriately synchronised during reproduction. The synchroniser 202 also outputs a converter specification via connection 206 to the media converter 28 which then acts on the appropriate conversions. As seen in Fig. 9, the media converter 28 outputs via a number of lines 31B, a variety of streams including audio, video (eg. RGB), graphics and text. This information is input to a decoded media stream synchroniser 210 formed within the media presenter 30 and which also receives synchronisation information 208 from the synchroniser 202. The decoded media stream synchroniser 210 acts to distribute the appropriate media to an appropriate sub-module of the output module 32. As seen in Fig. 9, the output module 32 includes a media control sub-module 212, a video renderer 214, a graphics renderer 216, a tactile generator 218 and an audio generator 220. The module 32 couples the appropriate signals to a corresponding output device 34, in this case including a video display 222 which receives outputs from each of the media controller 212, video renderer 214 and graphics renderer 216, a tactile glove 224 which receives information from a tactile generator 218 and an audio loud speaker 226 which receives audio information from the generator 220. These devices then produce output that is able to be interpreted by the user.

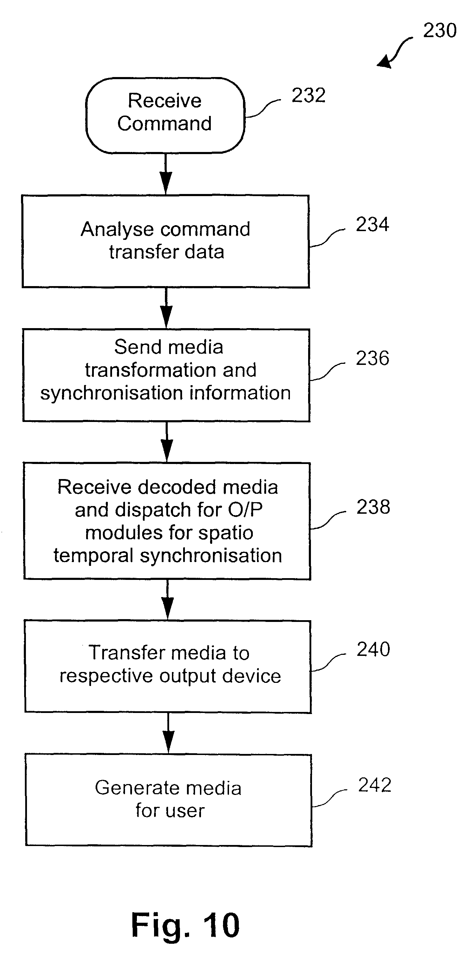

More specific operation of the output arrangement of Fig. 9 is seen in the flow chart 230 of Fig. 10 which commences at step 232 where the input MOB analyser 200 receives commands from the action manager 12 or media objects from the exchanger 24, handler 26 or converter 28. At step 234, the analyser 200 analyses the input commands or media objects and either sends header information of a processed media object to the action manager 12 or transfers the media object data to the media converter 28 and media object characteristics to the media synchroniser sub-module. At step 236, the media synchroniser 202 sends media transformation specifications to the media converter via the connection 206 and media synchronisation information to the media dispatcher synchroniser 210. At step 238, the media stream dispatcher 210 receives decoded media from the media converter 28 and despatches the decoded media to various output sub-modules as required for spatio temporal synchronisation. At step 240, the output sub-modules transfer the media to the respective output device and at step 242 the respective output device generates the appropriate media for consumption by the user.

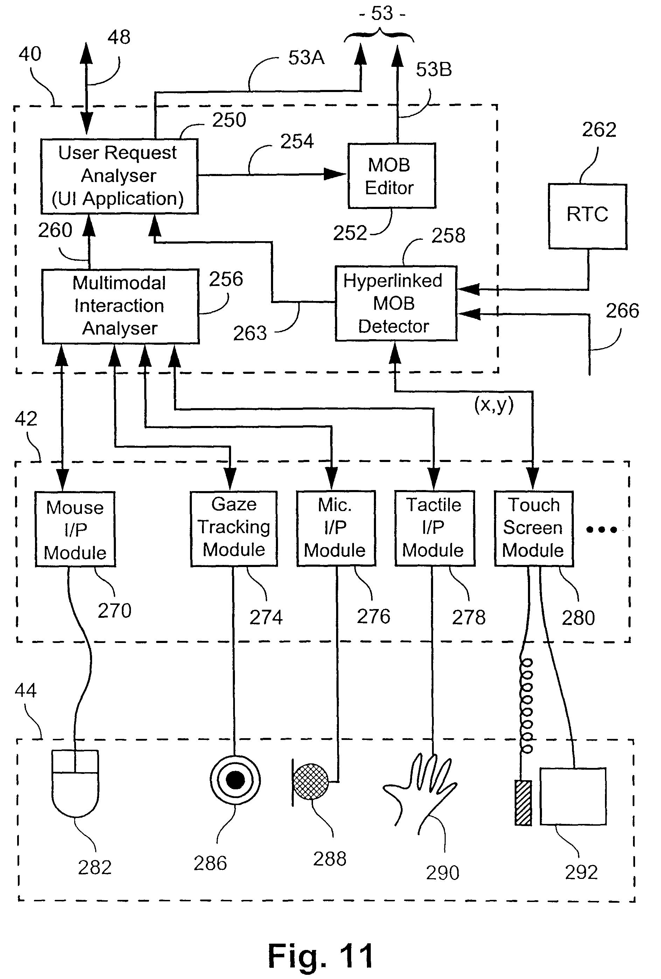

Fig. 11 functionally illustrates the input network of the arrangement of Fig. 2 where it is seen that the input device 44 may include a number of independent modules such as a mouse pointing device 282, a display 284, a camera device 286 (eg. for gaze tracking), a microphone 228, a tactile glove 290 and a touch screen 292, the latter being preferably associated with the display 222. It is noted that for maximum functionality the (input) tactile glove 290 may correspond to the (output) tactile glove 224. Each of the devices 282-292 couples to a corresponding sub-module of an input module 42. As seen, the mouse 282 connects to a mouse input module 270, whilst the camera 286 connects to a gaze tracking module 274. By detecting the eye-ball movement of a user over an interval of time, the gaze tracking module is able to identify user's point of concentration/interest on the screen (eg. the display 222). The microphone 288 couples to a microphone input module 276 which would typically include an analog-to-digital converter and similarly for the tactile glove 290 being coupled to the tactile input module 278. The touch screen 292 couples to a touch screen module 280 which decodes (x,y) screen coordinates. The outputs from the input module 42 are each supplied to the application module 40 with a touch screen input being provided to a hyperlinked MOB detector 258 and the remainder being provided to a multimodal interaction analyser 256. The hyperlinked MOB detector 258 converts the x,y coordinates, together with a time value obtained from a real-time clock 262 together with MOB header information sourced from the action manager via a line 266 into MOB data 263. The hyperlinked MOB detector 258 outputs the MOB data 263 to a user request analyser 250 also coupled for input from the multimodal interaction analyser 256 via a connection 260. The analyser 256 assimilates each of the inputs from the remaining input sub-modules which are provided to the user request analyser 250 which then interprets user input into interactive user request such as push, pull, transfer, annotate, select and save. The user request analyser 250 couples to the action manager 12 via the connection 48 which forwards user requests to action manager and receives calls from action manager to invoke the editor. The latter is done by the user request analyser 250 being coupled to an MOB editor 252 via a connection 254 which acts to annotate MOB commands and to forward the annotations via a line 53B together with selections via a line 53A, together forming the connection 53, to the media presenter 30 for editing and annotating the output media.

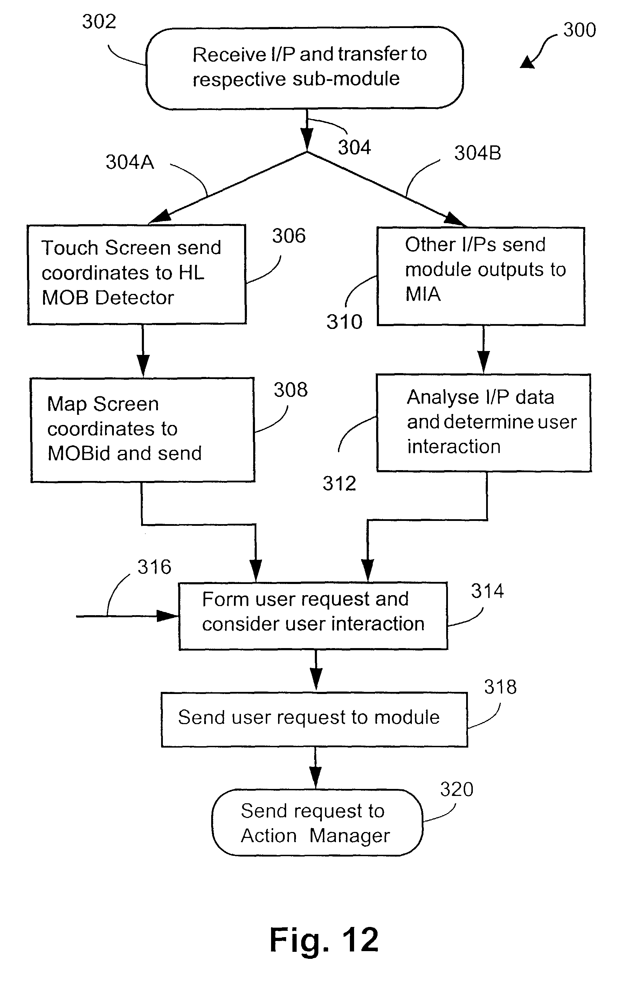

Operation of the input network of Fig. 11 is best understood with reference to the flow chart 300 of Fig. 12 where the input devices 44 receive input from the human user and transfer the same to the respective input sub-module 42. Control is then passed via a connection 304 and either one of connections 304A or 304B. Connection 304A couples to step 306 where the touch screen input module 280 sends selected screen coordinates to the hyperlinked MOB detector sub-module 258 which subsequently at step 308 maps screen MOB information and MOB header data from the action manager 12 and selected screen coordinates to an MOB identification, which is forwarded to the user request analyser 250. In respect of the other sub-modules, control passes via connection 304B to step 310 where the other input modules forward their outputs to the multimodal interaction analyser 156 which subsequently at step 312 analyses the data from the various input modules and determines a user interaction which is then sent to the user request analyser 250. At step 314, the user request analyser 250 analyses the forms of user request while considering user interaction together with MOB identification and commands 316 received from the action manager 12. Next, at step 318 the analyser sends the user request to the appropriate module which can include, at step 320, sending a request for media interaction (eg. push, pull, transfer, etc) to the action manager.

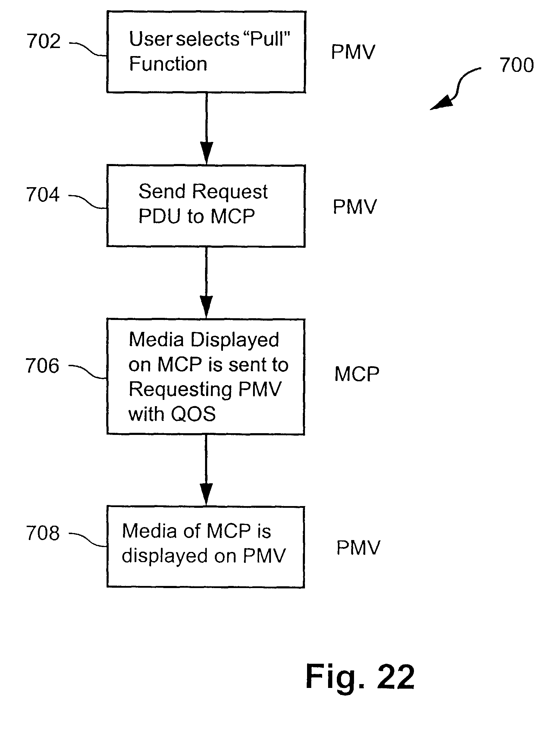

The sequence of operations that take place during the various key interactive functionalities, namely, PULL, PUSH, transfer, annotate, etc., can now be described with reference to the example of the sequence of operations for the interactive function 'PULL' as seen in Fig. 22.

Fig. 22 shows a flow chart 700 for the various procedures involved in performing a "PULL" function whereby a user extracts information regarding context on the MCP 2 onto his corresponding PMV 3. The method commences at step 702 where the user selects a "PULL media" button or other type of actuator on the appropriate PMV 3 which causes the PMV 3 to implement step 704, entailing the sending of a request protocol data unit (PDU) to the MCP 2. A PDU is a packaged communication data format or protocol operating within the system at hand. Step 704 results in a number of operations within the PMV 2 prior to the actual requesting PDU being sent to the MCP 2. With reference to Fig. 2, the user selection is received via the input device 44 and input module 42 which is conveyed to the application module 40 for interpretation. The application module 40 creates a requesting PDU within the PMV 3 which is transferred to the action manager 12. The action manager 12 then undertakes to examine the current session state while examining the application protocol 14 and those local resources 22 and user profiles 20 currently available and/or enabled in the PMV 3. The action manager 12 collates such information into a PDU request for the MCP 3 based upon the particular application protocol. The request is transferred from the action manager 12 to the information exchanger 10 where the application protocol based PDU request is reformatted into a network protocol PDU for transmission over the network 9 via the link 11.

The next portion of the flow chart 700 occurs within the MCP 2 and is seen at step 706 where the media displayed on or referred to by the MCP 2 is sent to the requesting PMV 3 together with the appropriate quality of service (QOS). Step 706 occurs within the MCP 2 and includes a number of individual stages, the first of which involves the receiving of the network protocol PDU from the network 9 which originates in a PMV 3 through step 704. This is received into the information exchanger 10 of the MCP 2 where is it unpacked into a PDU request conforming to the same application protocol embedded within the MCP 2. That request is then provided to the action manager 12 for interpretation. Where the resources demanded by the "PULL" function are small, for example provision of simple text information such as a hyperlink URL, and such will not present a burden upon a available resources within the requesting PMV, the action manager 12 can act to supply such information immediately by return. However, it is more often the case where the information being requested is complex and/or voluminous, such as the requesting of a media object, the action manager 12 of the MCP 2 must then negotiate with the action manager 12 of the requesting PMV 3 as to the appropriate resource allocation required for the delivery of the appropriate media object to the requesting PMV 3. Typically, this involves obtaining an identification of the media object from the local media presenter 30 to identify its size and corresponding resource requirements for appropriate media handling and conveying same to the PMV 3 so that the PMV 3 can allocate appropriate resources (eg. memory, processor power, decoder unit, etc.) in anticipation of receipt of the media object. The action manager 12 of the MCP 2 then instructs the MOB handler 26 to extract the appropriate media object from the data base 36 which is then presented to the MOB exchanger 24. Whilst doing so, the action manager 12 formulates an MCP PDU which is provided to the information exchanger 10 for output to the network 9. To conclude step 706, the information exchanger 10 of the MCP 2 converts the corresponding PDU into a network protocol PDU which is transmitted over the network containing the requested media object from the MOB exchanger 24.

Once transmitted from the MCP 2, step 708 occurs where the media extracted from the MCP 2 is displayed on the requesting PMV 3. This involves a number of steps which occur within the requesting PMV 3. Initially, the network PDU incorporating the media object is received by the MOB exchanger 24. The PDU is unpacked by the MOB exchanger 24 and the media objects transferred directly to the media presenter 30. If the media object returned via the PULL operation includes referenced hyperlinks or associated information, optionally, the user may select for those hyperlinks to be retained locally in which case, the MOB exchanger 24 transfers the information to the MOB handler 26 which acts to store the information including the hyperlinks in the MOB database 36. Based on information acquired while interacting with the remote action manager 12 of the MCP 2 at step 706, the local action manager 12 in the PMV 3 now controls the media presenter 30 to output the requested media object on the PMV via the output module 32 and output device 34.

In the manner described above, it is thus possible for a user of a PMV 3 to view media context on an output device 34 of the MCP 2 and to make a selection (PULL) of one component of that context from the MCP 2 for display on the corresponding PMV 3.

In a similar fashion, the user may wish to PUSH media context from his PMV 3 to the MCP 2, or TRANSFER the media context to other PMV's 3. Also the user may wish to ANNOTATE the context with his own input, and, where appropriate, STORE the context so that such may be retrieved at some later time.

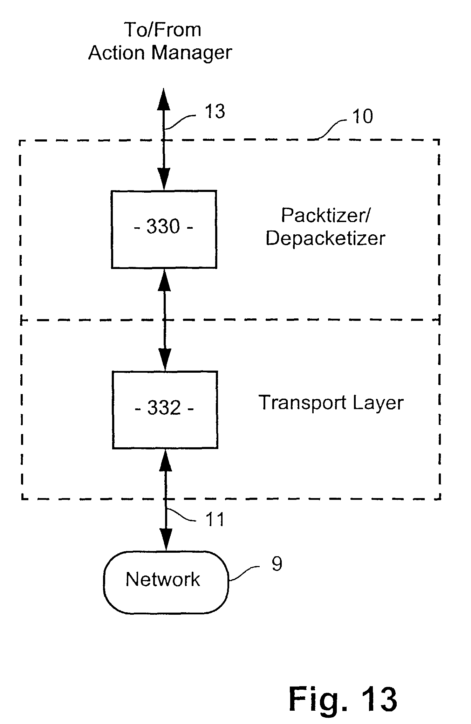

Fig. 13 illustrates a high level arrangement of the information exchanger 10 seen in Fig. 2. As seen, the exchanger 10 couples to the network 9 via a connection 11 and includes a transport layer 332 which in turn connects to a packetizer/depacketizer 330 which then connects to the action manager 12 via the line 13. The transport layer 332 is a module which invokes an appropriate communication protocol for operation on the network 9 which may be one of a large of international and/or private standards. The packetizer/depacketizer 330 packetizes media before transferring it to the transport layer 332. Packetized media received from the transport layer 332 is de-packetized before handing it over to the action manager 12.

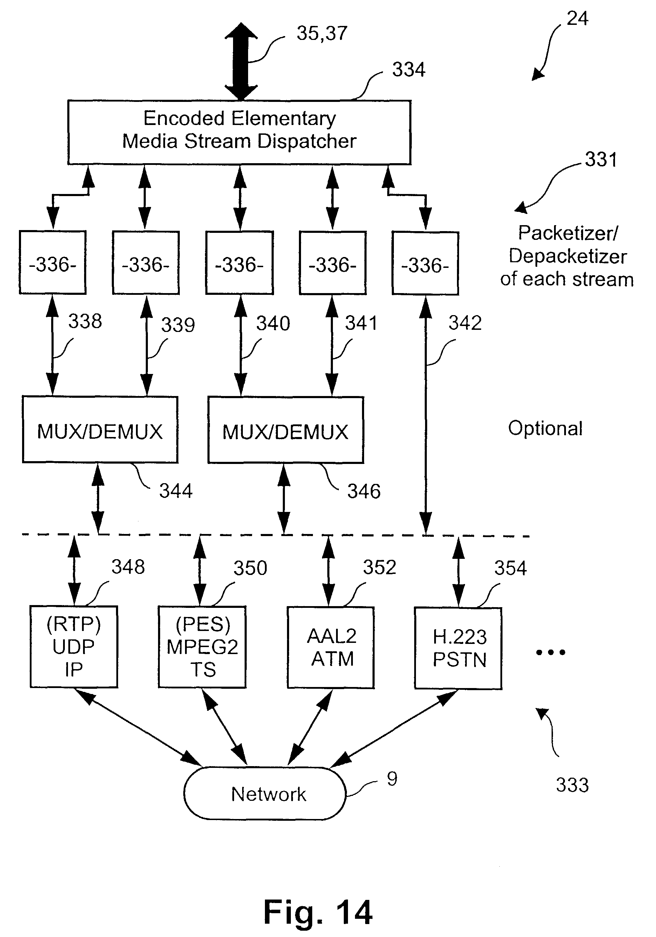

Fig. 14 illustrates the configuration of the MOB exchanger 24 which couples to the network 9 via a transport layer 333. In this configuration, the transport layer 333 includes a number of transport modules 348, 350, 352 and 354 arranged to implement appropriate communications data protocols. For example, the transport layer 354 provides for inter-operability with a public switch telephone network (PSTN), whereas the module 352 provides for asynchronous transfer mode (ATM) communications consistent with broadband-ISDN networks. The transport layer 350 provides for communication as MPEG-2 data and transport layer 348 provides for media communication protocol over the Internet. Information from the transport layer 333 is passed to an optional multiplexing layer including multiplexer/demultiplexers 344 and 346. The multiplexers 344,346 couple via respective communication lines 338-342 to packetizer/depacketizers 336 for each stream of data being despatched and delivered from an encoded elementary media stream dispatcher 334 which couples to the bus 27. The dispatcher 334 provides for clustered encoded elementary streaming of data having the same quality of service which is relevant where for example, such is to be output to the network or is received from the network whereby multiplexing using the multiplexers 344 and 346 may be performed for those data streams having an identical quality of service.

Although the foregoing description has been provided with respect to a generic media unit 23, it will be appreciated that differences in implementation will arise depending upon implementation as either an MCP 2 or a PMV 3. Significantly, when implemented as a MCP 2 the array of input devices such as those seen in Fig. 11 may be simplified, for example to only a mouse and keyboard typically associated with a computer system. This is because the MCP 2 would ordinarily operate automatically in providing a predetermined media context and in handling user requests via interconnected PMV's 3. The user inputs therefore need only be used for system implementation, operation and/or maintenance.

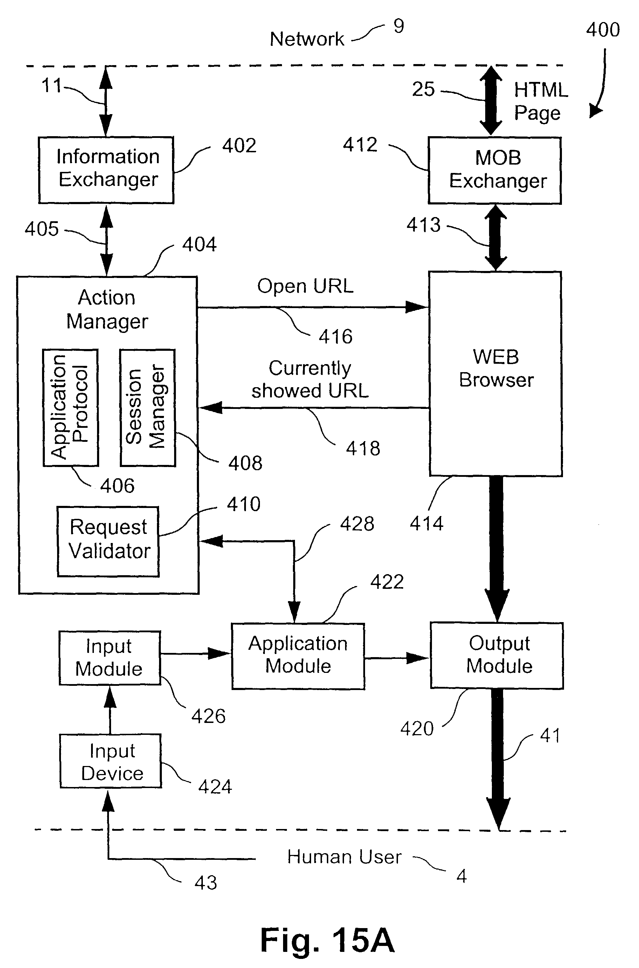

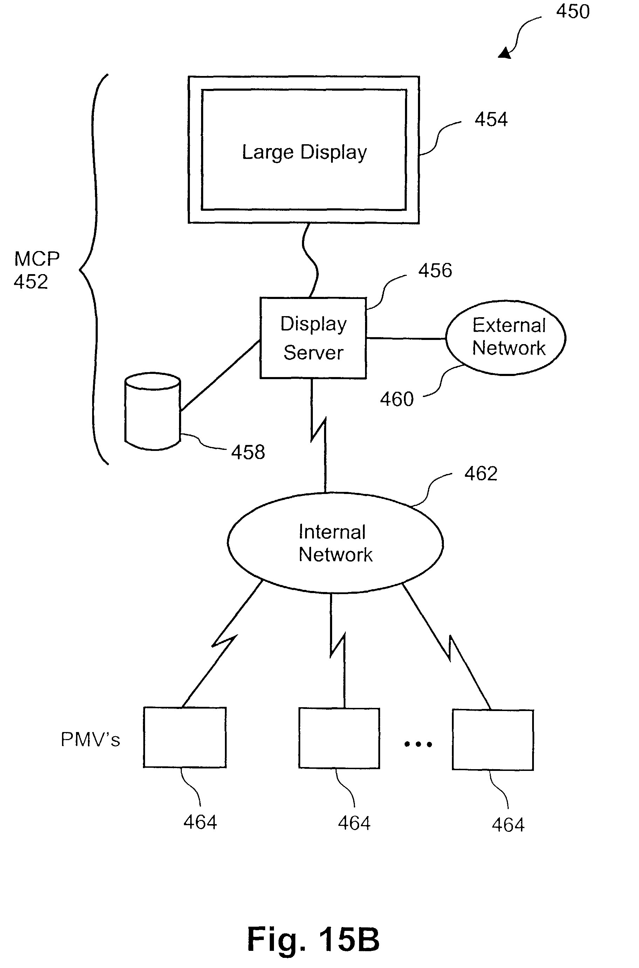

Fig. 15A illustrates a configuration 400 of an alternative embodiment including a number of modules corresponding to those shown in Fig. 2 and having the same names and to which a corresponding description above applies. The embodiment of Fig. 15 is characterised by the inclusion of a web browser 414 which substitutes for the MOB handler 26, media converter 28 and media presenter 30 of the arrangement of Fig. 2. The web browser 414 operates in a like manner to known web browsing software products such as Netscape (Netscape Corporation) and Microsoft Explorer (Microsoft Corporation) and receives commands 416 from the action manager 404 in the form of request to open specific uniform resource locators (URL's). This then invokes the web browser 414 to call on the MOB exchanger 412 to obtain an appropriate HTML page from the network 9 and which can be output by the output module 420. The web browser 414 returns a currently shown URL 418 to the action manager 404 which is configured to process requests in response to specific user inputs as in the previous embodiment.

Using the arrangement of Fig. 15A, appropriate MCP 2 and PMV's 3 are able to operate as individual addresses on the Internet or World Wide Web which forms the network 9. However, because of the specific context displayed from the MCP 2, users of the PMV 3 can be limited to specific context related information being sourced by the arrangement 400 in response to specific requests thus maintaining the user's focus on the particular media context being displayed on the MCP 2. Such limiting can be achieved in software by limiting URL requests to information sourced by the local network of MCP 2 and PMV's 3.

Fig. 15B shows an alternate networked implementation 450 where an MCP 452 may be implemented by a display 454 and an associated display server 456 and store 458. The server 456 is shown connected to an external network 460 (eg. the Internet) and to an internal network 462, preferably implemented using radio frequency communications whereby the PMV's 464 couple to the MCP 452 via the internal network 462.

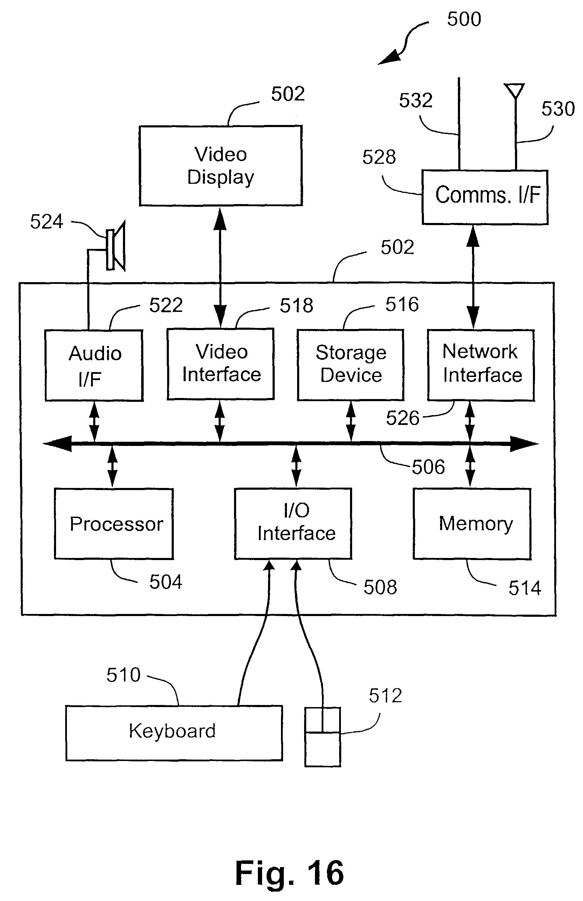

Turning now to Fig. 16, the functional diagrams of Figs. 2 and 15 may each be implemented by an appropriately configured general purpose computer systems such as the system 500 illustrated in Fig. 16. The system 500 includes a computer module 502 having a common system bus 506 and to which various controlling modules couple including a microprocessor 504, a random access memory unit 514 and a storage device 516 such as a hard disk drive, floppy disk or CD ROM. An I/O interface 508 couples a user operable keyboard 512 and mouse pointing device 512 to provide input commands to the processor 504. Also coupled to the bus 506 is a video interface 518 which provides for the display of information on the video display 520. An audio interface 522 provides for audible reproduction of media via a loud speaker 524. Also indicated is a network interface 526 which couples the computer module 502 to a communications interface 528 which provides for connection to the computer network described above, for example via an RF link 530 or a wired connection 532. The functionality of the computer system 500 in accordance with the present embodiment can be provided through application software which may be derived from the computer network 9 and/or resident on the storage device 516 and which is operable under control of the processor 504 to receive user commands and provide appropriate information via the display 520 and loud speaker 524. Where appropriate, and not illustrated in Fig. 16, the computer system 500 may be supplemented by specific hardware devices configured to perform appropriate media manipulations, such as those shown in Fig. 3 for the conversion of particular media types.

In order for the PMV's 3 to be generally universally useful, it is desirable that the communications interface 528 be configured to handle a variety of data types in a convenient, versatile and efficient manner. For example, the GSM communication protocol developed for cellular mobile telecommunications applications is one that may be used by virtue of its ability to convey data (eg. fax, e-mail), text (eg. pager messages) and real-time data (eg. audio and video). Further, developments in radio frequency cellular communications can support an arrangement of a number of MCP's 2 operating essentially side-by-side (eg. in a shopping mall) each on a dedicated network communication frequency or within a dedicated band. Frequency diversity in each PMV 3 can enable the user to select a desired source upon seeing an appropriate MCP 2.

It will further be appreciated that the general purpose computer 500 of Fig. 16 may be configured, particularly in the MCP configuration as a desktop-type module, whereas for the PMV-type modules, a notebook-type computer or palm-top computer would be appropriate.

The preferred implementations of the described embodiments would typically include a configuration such as that shown in Fig. 15B utilizing computing systems generally according to Fig. 16 and described in the foregoing paragraph.

Turning now to Fig. 17A, a specific application of the preferred embodiment is illustrated. In this example, a classroom scenario 600 is depicted and which is equipped with an MCP 602 which serves as a multimedia board that replaces a traditional black/white board. Students 616 and 622 carry an appropriate handheld PMV 604 and 608 respectively, which act to replace traditional paper notebooks and the like. In the scenario 600, a teacher 626 would enter the classroom and turn on the MCP 602 and insert a lecture disk into a disk drive module 38 (see Fig. 2) of the MCP 602 and then start to give the lecture to the students whilst the multimedia presentation is generated and displayed on the MCP 602.

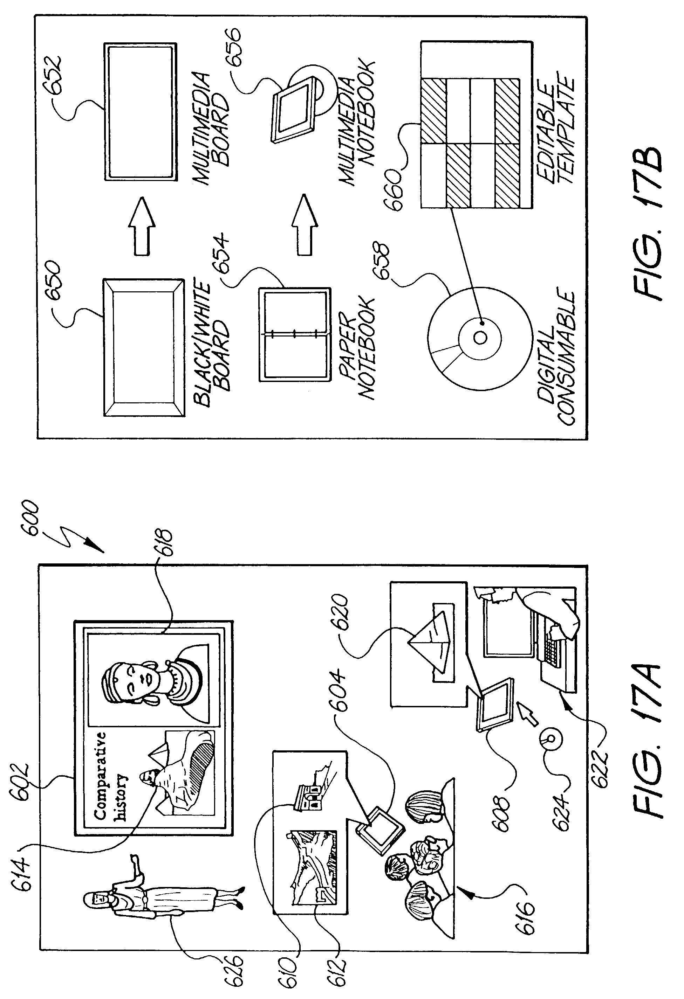

Students attend the classroom with their PMV's 604,608 and during the lecture, students may engage in a number of operations. For example, the students may merely follow the presentation provided by the MCP 602 on the large display which, in this example provides a primary context of "Comparative History". Alternatively, students, such as the student 622, may select for investigation particular components of the primary context shown on the MCP 602. In this scenario, the student 622 has selected for display on his PMV 608 detail information on a pyramid 620 which is seen to be an individual component of the main context shown on the MCP 602. Students in the same classroom may use their PMV's to explore "associated hyperlinks" which accompanies the context generated on the large display of the MCP 602. Such associated hyperlinks may not be explicitly visibly present on the primary context although they may for example accompany the context. For example, in the classroom scenario 600 of Fig. 17, the lecture content focuses on Egyptian history and this provides the context onto the large display MCP 602, but since the class is one of comparative history, therefore, relevant materials like the Great Wall of China 612, Arch-de Triumph 610 of France, etc, may be provided as associated hyperlinks. Students 616 uses their PMV's 604 to independently explore such associated hyperlinks 610 and 612. The students then having selected those particular objects for personal reproduction may then obtain further information regarding those particular objects whilst the main context of the display 602 proceeds.

Although the main context of the MCP 602 includes different primary components, those being the Egyptian scene including the Sphinx 614, and that of an Egyptian Emperor 618, the preferred embodiment permits individual users to select individual components where appropriate. In this embodiment, the user 622 using his PMV 608 has selected a particular pyramid 620 from the Egyptian scene 614. In this manner, although the main context may include a number of major components, each of those components may have individually selectable items therewithin and which may be investigated where appropriate. In this fashion, with certain restrictions imposed by the teacher, students may independently "fast forward" and/or "rewind" upon the lecture content on individual PMV's as the lecture proceeds on the MCP 602. Further, the use of the PMV's permit the students to obtain additional information dynamically hyperlinked to a particular object either from the local source in MCP 602 or from an alternative source (eg. the WWW). It also permits the student to annotate and/or store multimedia contents as is required, perhaps on their own consumable disk storage device 624 such as a floppy disk or WORM optical memory. The system 600 also provides students with the ability to reflect and/or reproduce multimedia content from their own PMV's onto the MCP 602 (eg. while questioning), in addition to transferring multimedia content of their own interest from their own PMV to another PMV and, if permitted by the teacher, engage in side chat with another student.

In a further application, before attending class, students may buy blank multimedia notebook-style disks which come with built-in configurable "school templates". Such templates allow the students to fill out a class routine specifying class name, time/day/duration of class etc. This need be the only initial configuration that the student may choose to do. Later in the classroom, whilst the lecture is taking place, lecture contents of the same subject may be automatically grouped together where appropriate with background information added by the student including captions, cross-references, annotations and the like. At the end of a day or week, the student may then select a particular class from the routine and obtain all lecture materials stored from that particular class and compile the same into an individual series of electronic notes. Such then allows the student to input such notebook disks for an entire semester simultaneously and automatically extract lectures relating to the same teacher and/or subject for the student. Such information may also be shown as a tree generated automatically for convenience of review and/or investigation.

Fig. 17B depicts how current materials used in education, for example, may be conveniently substituted for by arrangements used in the preferred embodiment. In particular, the traditional teacher operated black/white board 650 is replaced by a multimedia board 652 (eg. MCP) which can display images sourced over a computer network or drawn by the teacher 626, thus emulating a more traditional teaching method. Similarly, the traditional student paper notebook 654 is replaced by a multimedia notebook 656 (eg. PMV). Further conventional consumable sources, such as text books and CD-ROM's 658 may be replaced by editable templates 660 permitting interactive development of personalised information, the templates 660 for example being built onto a CD-ROM, such as a magneto-optical disk.
It will be apparent from the foregoing that the described arrangements provide multiuser scenarios where the same main media context on a large display (MCP) is consumed simultaneously by several users and provides for individuals to pursue their own investigations on their personal media viewers (PMV's) within the same context without upsetting or disrupting the main context as it may be viewed by one or more other users (students) at that time and has a temporal flow preferred by the author (teacher).

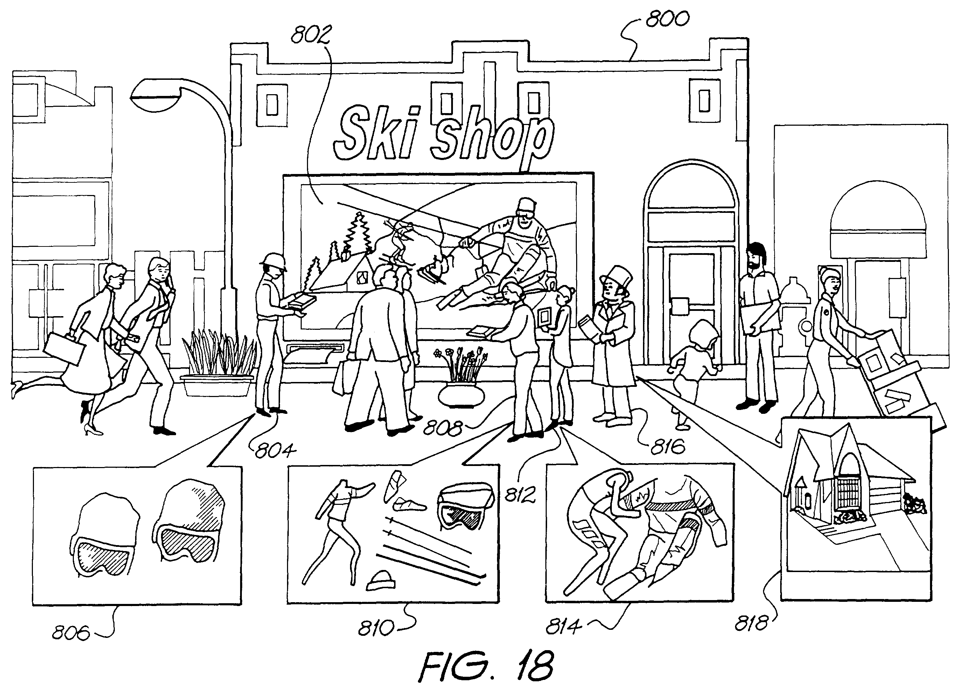

Such systems provide great utility and a wide area of uses such as shopping and marketing where, for example, as seen in Fig. 18 a retail outlet 800 (eg. ski shop) may include in its front windows, one or more MCP displays 802, thereby enabling users to investigate those items that may be on sale at any one time without having to enter the store. The MCP 802 illustrates a scene comprising a skier in the foreground with some skiers in the background and a skiing lodge. Traversing in front of the ski shop 800 are a number of pedestrians, some of whom include PMV's configured to link with the MCP 802. The first person 804 is shown utilising a PMV to obtain details of skiing goggles 806 which are apparent in the main context of the display 802. This can be achieved by the first user 804 selecting from his own PMV a graphical icon corresponding to skiing goggles. A second user 808 uses his PMV to obtain information on skiing attire and accessories as illustrated at 810. A further user 812 has used her PMV to select clothing illustrated in the figures of the display 802 as depicted in 814. Finally, a fourth person 816 finds interest in the lodge depicted by the display 802 and obtains details regarding the lodge as seen at 818. Significantly, whilst the selected details generally relate to skiing, the details on the lodge 818 may relate to leasing and/or accommodation details for a holiday which may or may not coincide with the skiing season.

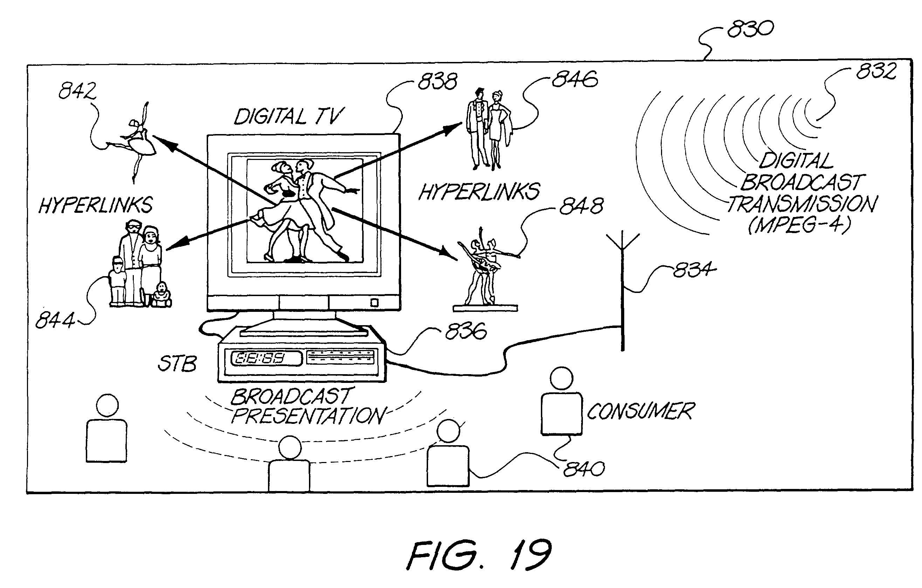

Another example lies in digital television broadcast as seen in Fig. 19 where the large TV screen (MCP) provides the general context for the audience and members of the audience may independently explore context relevant objects of individual interest by using their personal media viewers (PMV's). The functionality of such PMV's may be embedded in so-called "fat" remote controllers. In Fig. 19 a digital broadcast system 830 is illustrated in which a digital broadcast transmission 832 preferably in MPEG 4 format is received by an antenna 834 coupled to a decoder and controller module 836. A digital TV display 838 is connected to the controller module 836 and provides a display to an audience 840 of a primary context, in this case illustrating ballroom dancing. Each member of the audience 840 may be provided with a PMV (not illustrated in this figure) which enables the audience member to continue to observe the main dancing display from the digital TV 838 whilst, using their own PMV, exploring hyperlinked information relating to the primary context. Schematically illustrated in Fig. 19, is a first hyperlink 842 which for example may provide detail on the female dancer shown in the main context. A further hyperlink 844 may relate to the history of the female dancer, for example by depicting her family life. A further hyperlink 846 may relate to the male dancer and in particular to that dancer's social lifestyle whereas a further hyperlink 848 may relate to the relationship between the two dances and the various performances they have made together. Each of the hyperlinked further information 842-848 may be represented to individual users on a selective manner using their own PMV whilst the main context of the digital TV 838 continues to play.

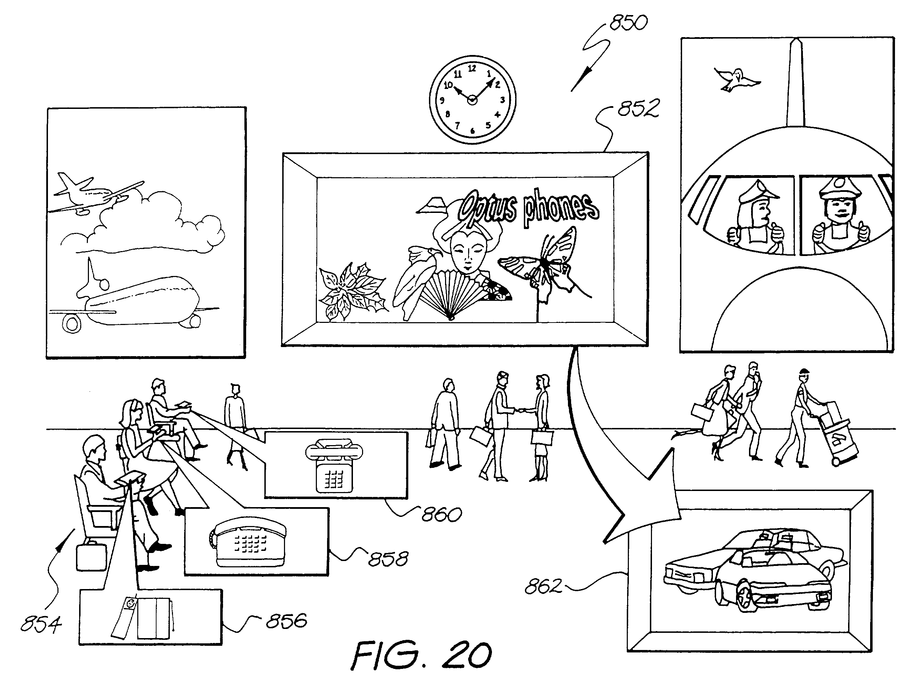

Another example is given in Fig. 20 where commercial advertisements 850 are displayed on a large display (MCP) 852 which provides the context for the general audience. Prospective customers 854 use their hand held devices (PMV's) to acquire additional information relevant to the context on the large display. The hand held device may, for example, be an enhanced mobile phone, which may receive and display text information on a text display, or alternatively incorporate a video display. From Fig. 20, it is seen that the MCP 852 provides an advertisement relating to a telephone company and that the customers 854 utilise their PMV's to obtain details on respective telephone products 856,858,860. As also seen in Fig. 20, the MCP 852 may provide a further contextual relationship between the telephone company and a further display 862 relating to a motor vehicle. Such an arrangement may be used to advertise services in relation to the installation of mobile telephones in motor vehicles and/or a preference scheme in relation to discounted calls when used by owners of certain makes of motor vehicles, for example.

A further application would be in the court room where large quantities of evidence may be under review at any particular time, for example if a witness is being cross-examined, and those researching the proceedings in the court room may traverse a variety of information all within the context of the same witness and/or evidence.

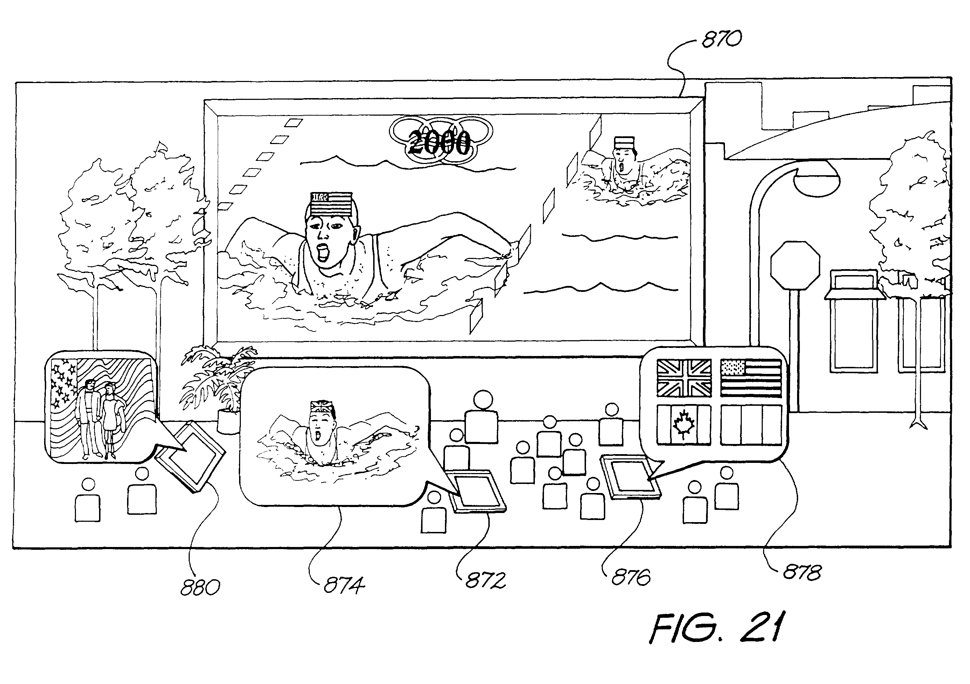

Another example is that of a sports broadcast where, as seen in Fig. 21, the large display (MCP) 870 provides the information of general public interest, in this case an Olympic swimming event. For example, in this case, the leading swimmers of the swim competition are shown on the large display 870 for public viewing. Individual members of the audience may use their personal media viewers (PMV's) to view the condition of other swimmers who are not displayed on the large display. For example, whereas the main display 870 pictures a swimmer representing the United States of America, a PMV 872 may be configured to show a representation 874 of a swimmer representing the United Kingdom. A further PMV 876 may show the nationalities of swimmers competing in the race, seen at 878. A further PMV 880 may be manipulated to provide biographical detail on the swimmer from the United States of America who is leading the swimming race. The context relevant information on each PMV may be supplied through the use of associated hyperlinks (eg. X-link of XML, etc).

Although the above examples each depict how visual information is conveyed according to the principles of the present invention, other types of media may also be readily conveyed, video data including both audio and visual data for example. Another example is where an image displayed by an MCP 2 refers and reproduces another data type on a requesting PMV. For instance, with reference to Fig. 18, a hyperlink accessed by the image of the skier may return audio data, corresponding to the "SWOOSH' sound made by skis against the snow. Other hyperlinks may return other data types, such as text data for a price list or catalogue of items available from the ski shop.

Further, the data transferred between MCP and PMV need not be limited to audio, visual or textual data. For example, in the classroom environment, the teacher may make available a document format on the MCP which may be extracted by the students using their respective PMV's and individually completed or edited according to personal preference.

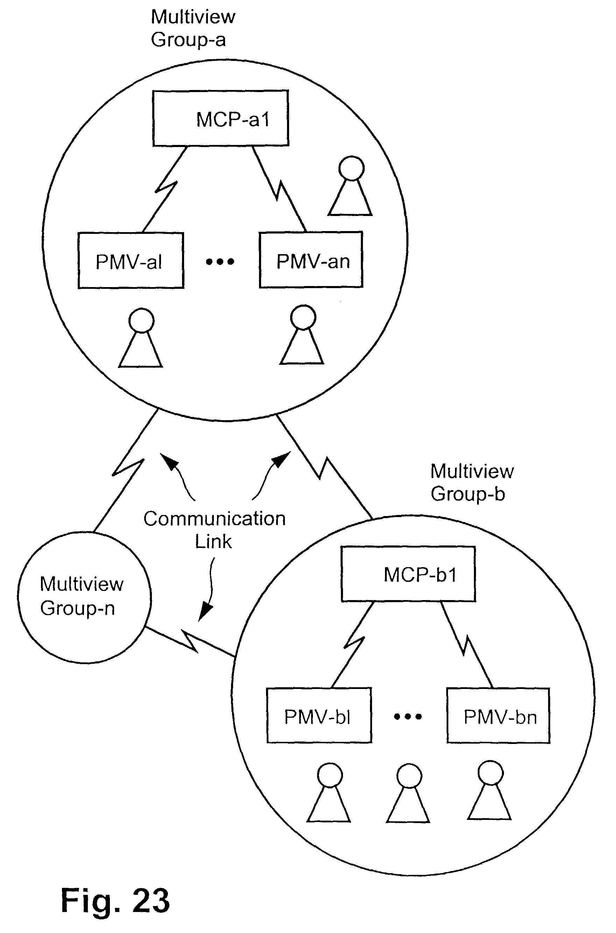

Embodiments of the present invention can be extended to a multigroup scenario, such as that seen in Fig. 23 where each group is interacting with the multimedia context on respective group's large display and the same context is displayed on all the large displays. In such a scenario, users can interact not only with the media but also with each other (eg. by the interactive functionality: "transfer"), crossing group boundaries, as if they were in the same conference room.

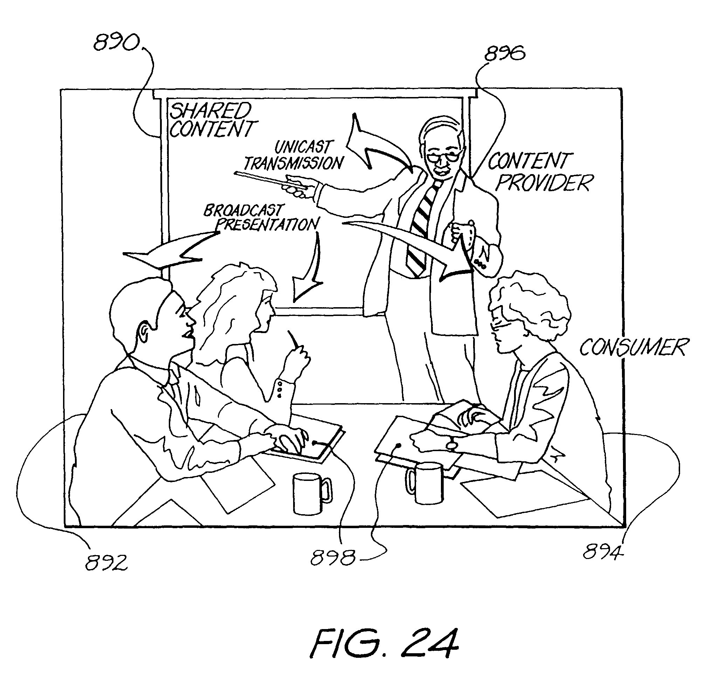

Another example lies in an office presentation system seen in Fig. 24, where the main presentation material 890 (eg. multimedia slides, transparencies with hyperlinks, etc) provides the context. Individual members 892,894 of the audience may use their personal media viewers 898 (eg. laptops, etc) to interact (push, pull, transfer, etc) with the multimedia context.

In the various embodiments described, the primary information presented by the MCP may be selectively presented on a PMV so as to form a graphical user interface thereby enabling selection of desired secondary information associated with the context represented by the primary content. This, for example, is seen to occur in the ski shop embodiment of Fig. 18. Further, access via a portable PMV to the network 9 may be obtained by the network 9 having a protocol which enables users to roam-in and roam-out of connection, in a manner corresponding to that which occurs when entering and leaving cells in a cellular-based mobile telephone system, such as GSM.

The foregoing only describes a number of embodiments of the present invention and modifications can be made thereto without departing from the scope of the present invention.

## Claims

1. A method of providing information to a plurality of users, said method comprising the steps of:
(a) reproducing audio and/or visual data having predetermined contents on a first reproduction means;
(b) receiving input from at least one of said plurality of users and providing user data in response to said input, said user data being associated with at least part of said predetermined contents; and
(c) reproducing on at least one second reproduction means said user data to at least said user.

2. The method according to claim 1, wherein the first reproduction means is connected to at least one said second reproduction means via a local communication network.

3. The method according to claim 1, wherein the user data is associated with at least part of said predetermined contents by hyperlinks.

4. The method according to claim 1, wherein said audio and/or video data is time varying and pertains to changing audio and/or visual content.

5. The method according to claim 2, wherein said local communication network provides interactivity between the first reproduction means and the second reproduction means.

6. The method according to claim 2, wherein said local communication network is further connected to a plurality of second reproduction means and provides interactivity between said plurality of second reproduction means.

7. The method according to any one of claims 1 to 6, wherein the first reproduction means comprises a relatively large multiple viewer display device associated with a (first) processing means.

8. The method according to claim 7, wherein the second reproduction means is a relatively small personal media viewer associated with a (second) processing means.

9. The method according to claim 7, wherein the second reproduction means is a tactile interactive device associated with a corresponding processing means.

10. The method according to claim 1, wherein said reproduced user data includes data within a predetermined and user interpretable context of said predetermined contents.

11. The method according to claim 10, wherein said reproduced user data is constrained within said context.

12. The method according to claim 10, wherein said predetermined contents includes a plurality of media types and said reproduced user data includes at least one of said media types.

13. The method according to claim 10, wherein said predetermined contents include at least one media type and said reproduced user data includes at least one other media type.

14. The method according to claim 1, wherein said data relating to parts of said predetermined contents is arranged as media objects selectively transferable between said first reproduction means and said second reproduction means, each said media object including at least one of a plurality of media types.

15. The method according to claim 14, wherein said media types are selected from the group consisting of audio data, static visual data, dynamic visual data, text data and format data.

16. A method according to claim 1, wherein said first reproduction means is configured for simultaneous interpretation by said plurality of users, said predetermined contents having user selectable parts within an established context of said contents, wherein any one of said parts is selectable by any one of said users to reproduce on a corresponding said second reproduction means further data related to said selected part and within said context.

17. A method according to claim 16, wherein said second reproduction means are substantially portable and intended for viewing by a single said user.

18. A system for providing information to a plurality of users, said system including:
an information source having a first reproduction means for reproducing (first) media data having predetermined contents simultaneously to a plurality of users,
at least one information destination operable by one of said users and having a second reproduction means and a user input, said information destination being operable via said user input to select at least part of said predetermined contents to reproduce by said second reproduction means (second) media data associated with said selected part.

19. A system according to claim 18, further comprising a local communication network interconnecting said information source with each of said information destinations.

20. A system according to claim 19, wherein said parts of said predetermined contents are associated with corresponding hyperlinks that provide for access with said information source to the corresponding second media data, wherein said user input acts to select the corresponding said hyperlink.

21. A system according to claim 20, wherein said media data includes at least one of audio data and visual data adapted for reproduction by said second reproduction means.

22. A system according to any one of claims 18 to 21, wherein said predetermined contents, said parts and said second media data are constrained within a context of said predetermined contents.

23. A system according to claim 22, wherein said information source comprises a first computer system including (first) processing means, a (first) store for retaining said media data, said first reproduction means including at least a first display capable of simultaneous viewing by said plurality of users, and said one information destination comprises a portable (second) processing means coupled to said second reproduction means, said second reproduction means including at least a second display intended for viewing by a single said user.

24. A system according to claim 22, wherein said predetermined contents are at least initially simultaneously reproduced by said second reproduction means and from which said user, by manipulating said user inputs selects said part, and from which selection, said second media data at least is reproduced by said second reproduction means.

25. An information distribution system, said system comprising:
(a) a primary context presentation arrangement comprising (first) multimedia presentation means configured for presentation of primary information content to a proximal audience comprising plural persons, and (first) processor means for providing said primary information content to said first multimedia presentation means and for associating secondary information content with said primary information content, said secondary information content being constrained to a context of said primary information content;
(b) at least one portable presentation arrangement comprising (second) multimedia presentation means and (second) processor means and operable by a user being one of said persons for selectable presentation of information selected from the group consisting of said primary information content and said secondary information content; and
(c) a local communication network interconnecting said primary context presentation arrangement with each said portable presentation arrangement for providing said primary information content to each said portable presentation arrangement and via which at least one information selection by said user operating the corresponding said personal presentation arrangement is conveyed to said first processor means for distribution of corresponding selected secondary information content to said corresponding personal presentation arrangement.

26. A system according to claim 25 wherein said local communication network comprises a radio frequency network configured for packetized communication of data between said arrangements within said system, and said multimedia presentation means each comprise at least display means for displaying visual information to said user.

27. A system according to claim 26 wherein said primary information content and said secondary information content are each formed by at least one media object comprising content information to be presented via said presentation means and control information permitting user selection of information so presented to provide for presentation of said secondary information content.

28. A system according to claim 27 wherein said control information is presented via said second presentation means as at least one icon, said icon being selectable by said user to invoke presentation of said secondary information content by said second presentation means.

29. A computer readable medium comprising a computer program product for providing information to a plurality of users, said computer program product comprising:
first means for reproducing audio and visual data having predetermined contents on a first reproduction means;
second means for receiving input from at least one of said plurality of users and providing user data in response to said input, said user data being associated with at least part of said predetermined contents; and
third means for reproducing said user data on at least one second reproduction means to at least said user.

30. A computer readable medium according to claim 29, further comprising fourth means for providing a communication protocol over a local communication network interconnecting the first reproduction means and said second reproduction means to provide interactivity between the first reproduction means and the second reproduction means.

31. A computer readable medium according to claim 29, wherein said audio and/or video data is time varying and pertains to changing audio and/or visual content.

32. A computer readable medium according to claim 30, further comprising fifth means for associating said user data with at least part of said predetermined contents by hyperlinks.

33. A computer readable medium according to claim 30, wherein said local communication network interconnects a plurality of said second reproduction means and provides interactivity between said plurality of second reproduction means.

34. A computer readable medium according to claim 29, wherein said reproduced user data includes data within a predetermined and user interpretable context of said predetermined contents.

35. A computer readable medium according to claim 34, wherein said reproduced user data is constrained within said context.

36. A computer readable medium according to claim 34, wherein said predetermined contents includes a plurality of media types and said reproduced user data includes at least one of said media types.

37. A computer readable medium according to claim 34, wherein said predetermined contents include at least one media type and said reproduced user data includes at least one other media type.

38. A computer readable medium according to claim 29, wherein said data relating to parts of said predetermined contents is arranged as media objects selectively transferable between said first reproduction means and said second reproduction means, each said media object including at least one of a plurality of media types.

39. A computer readable medium according to claim 38, wherein said media types are selected from the group consisting of audio data, static visual data, dynamic visual data, text data and format data.

40. A computer readable medium according to claim 29, wherein said first reproduction means is configured for simultaneous interpretation by said plurality of users, said predetermined contents having user selectable parts within an established context of said contents, wherein any one of said parts is selectable by any one of said users to reproduce on a corresponding said second reproduction means further data related to said selected part and within said context.

41. A computer readable medium according to claim 40, wherein said second reproduction means are substantially portable and intended for viewing by a single said user.

42. A system according to claim 18, wherein said predetermined contents comprise a pre-authored compilation of multimedia works linked by an authoring context.

43. A portable presentation device comprising:
(first) multimedia presentation means;
(first) processor means for providing multimedia information for reproduction via said first multimedia presentation means; and
a communications transceiver for coupling said portable presentation device to a localised communication network associated with a multimedia presentation arrangement representing a source of information associated with a primary information context,
said arrangement comprising (second) multimedia presentation means configured for presentation of primary information content to a proximal audience including said user, and (second) processor means for providing said primary information content to said second multimedia presentation means and for associating secondary information content with said primary information content, said secondary information content being constrained to a context of said primary information content, wherein
said first processor means being configured to provide for selection by said user, using said primary information content, of said secondary information content for presentation via said first multimedia presentation means.

44. A portable presentation device according to claim 43, wherein said device is configured to present said primary information content using said first multimedia presentation means to enable said selection by said user.

45. A portable presentation arrangement according to claim 44, where presentation of said primary information content by said first multimedia presentation means forms a graphical user interface with said first processor means to enable said selection.

46. A portable presentation arrangement according to claim 43, wherein said communications transceiver provides for remote coupling to said communication network so as to couple said first and second processor means.

47. A portable presentation apparatus according to claim 43, wherein said first processor means is configured at least for one of extracting information from said arrangement, annotating information extracted from said arrangement, storing said information, pushing information to said arrangement, and transferring information to another said portable presentation device coupled to said network.
